# EUROPEAN PATENT APPLICATION

(11) **EP 4 572 335 A1**
(43) Date of publication of application: **18.06.2025**
(21) Application number: 23852027.4
(22) Date of filing: 14.08.2023
(51) Int. Cl.: H04R 9/06

(54) **HEAD-MOUNTED DEVICE**

(30) Priority: 12.08.2022 CN 202210968494; 17.08.2022 CN 202210986762; 31.08.2022 CN 202211065551; 02.09.2022 CN 202211073725
(71) Applicant: Beijing Zitiao Network Technology Co., Ltd., Beijing 100190 (CN)
(72) Inventor: XIA, Yu, Beijing 100028 (CN); XIA, Jiu, Beijing 100028 (CN); LIU, Guanghui, Beijing 100028 (CN); LIU, Meng, Beijing 100028 (CN); GUO, Jianjun, Beijing 100028 (CN)
(74) Representative: Dentons UK and Middle East LLP
(86) International application number: PCT/CN2023/112925
(87) International publication number: WO 2024/032808

(57) **Abstract**

A head-mounted device (100), comprising: a host (10); a wearable device (20), the wearable device (20) being connected to the host (10), an acoustic component (50) and a wire harness (40) being provided in the wearable device (20), and the wire harness (40) being used to supply power to the host (10); the wearable device (20) further comprises a spacer layer (22), the spacer layer (22) being located between the acoustic component (50) and the wire harness (40), and the spacer layer (22) being a high-magnetic permeability material layer. The head-mounted device (100) may affect the distribution of magnetic lines of force around the wire harness (40) under the attraction of the high-magnetic permeability of the spacer layer (22), which greatly reduces the magnetic field intensity near the wire harness (40), and reduces the changing amperage experienced by the wire harness (40), thereby reducing vibration amplitude of the wire harness (40) and the problem of noise generated by vibration of the wire harness (40). After the influence of the wire harness (40) on the acoustic component (50) is reduced, the probability that the acoustic component (50) generates vibration noise is also reduced.

## Description

This application claims priority to Chinese Patent Application No. 202210968494.7 filed on August 12, 2022, Chinese Patent Application No. 202210986762.8 filed on August 17, 2022, Chinese Patent Application No. 202211065551.7 filed on August 31, 2022, and Chinese Patent Application No. 202211073725.4 filed on September 2, 2022, and the entire disclosure of the aforementioned applications is incorporated herein by reference as part of the present disclosure.

### TECHNICAL FIELD

The present disclosure relates to the field of head-mounted device technology and specifically relates to a head-mounted device.

### BACKGROUND

A virtual reality (VR) all-in-one machine in the related art needs to be worn on the head of a user by means of a wearing apparatus. An acoustical device may be typically disposed in the wearing apparatus to transmit sound to the ears of the user so as to simulate the audiovisual effect of a virtual scenario. A wiring is generally needed in the wearing apparatus for power supply or other purposes.

For example, more and more head-mounted devices may be designed such that their batteries are placed at rear ends thereof to averagely distribute the weights of the head-mounted devices, thereby improving the wearing comfort of users. However, this form may separate the battery from a host unit at a front end. Therefore, a power supply wiring needs to be arranged in the wearing apparatus of the head-mounted device such that the battery is connected with the host unit at the front end by means of the wiring, enabling the head-mounted device to display picture information to a wearer.

### SUMMARY

At least an embodiment of the present disclosure provides a head-mounted device, comprising: a host; a wearing apparatus connected to the host, wherein an acoustical device and a wire harness are disposed in the wearing apparatus, and the wire harness is configured to supply power to the host; the wearing apparatus further comprises a spacer layer which is between the acoustical device and the wire harness, and the spacer layer is a high magnetic permeability material layer.

For example, the acoustical device has a sound outgoing side and a sound opposing side that are opposite to each other; the sound outgoing side of the acoustical device is disposed facing a head mount space; and the wire harness is on the sound opposing side of the acoustical device.

For example, a magnet is disposed in the acoustical device; and a vertical projection of the spacer layer on the sound opposing side of the acoustical device at least covers a vertical projection of the magnet on the sound opposing side of the acoustical device.

For example, the spacer layer is fixedly connected to the acoustical device.

For example, the spacer layer is fixed to the acoustical device through an adhesive.

For example, one or at least two spacer layers are present; and in a case where at least two spacer layers are present, two adjacent ones of the spacer layers are spaced apart or disposed next to each other.

For example, in the case where at least two spacer layers are present, the spacer layers are a first spacer layer and a second spacer layer, respectively; a magnetic permeability of the first spacer layer is higher than a magnetic permeability of the second spacer layer, and a magnetic saturation of the second spacer layer is higher than a magnetic saturation of the first spacer layer.

For example, in the case where at least two spacer layers are present, two adjacent ones of the spacer layers are connected through an adhesive; and the wire harness is connected to the spacer layer through an adhesive.

For example, the spacer layer comprises at least one of a cold-rolled carbon steel sheet, a silicon steel plate, a permalloy plate, and a nanocrystalline plate.

For example, the wire harness comprises at least one first wire and at least one second wire; the first wire is disposed adjacent to the at least one second wire; and/or the second wire is disposed adjacent to the at least one first wire.

For example, one of the first wire and the second wire is a positive connecting wire and the other one is a negative connecting wire.

For example, at least part of first wires and at least part of second wires are arranged alternately in a width direction of the wearing apparatus.

For example, all first wires and all second wires are arranged alternately in the width direction of the wearing apparatus.

For example, the wire harness comprises a plurality of wire harness layers that arranged in a thickness direction of the wearing apparatus; and at least part of first wires and at least part of second wires in each of the plurality of wire harness layers are arranged alternately in the width direction of the wearing apparatus.

For example, the wire harness comprises a first wire group and a second wire group arranged in the thickness direction of the wearing apparatus; the first wire group comprises one first wire; or, the first wire group comprises a plurality of first wires that are arranged in juxtaposition in the width direction of the wearing apparatus; and the second wire group comprises one second wire; or, the second wire group comprises a plurality of second wires that are arranged in juxtaposition in the width direction of the wearing apparatus.

For example, the first wire and at least one of the second wires are spirally arranged crosswise, and/or the second wire and at least one of the first wires are spirally arranged crosswise.

For example, a count of the first wires is equal to a count of the second wires, and the first wires and the second wires are spirally arranged crosswise each to each.

For example, the first wire and/or the second wire is/are covered with a protective layer; and the protective layer comprises a rubber layer, a plastic layer, or a carbon fiber layer.

For example, the wearing apparatus further comprises at least one reverse magnet repelling a forward magnet in the acoustical device.

For example, a way in which the reverse magnet is disposed comprises: the reverse magnet being disposed on an outer side of a frame of the acoustical device; or the reverse magnet being disposed in a groove, which is facing the forward magnet, of the wearing apparatus.

For example, in a case where the reverse magnet is disposed on the outer side of the frame of the acoustical device, the way in which the reverse magnet is disposed comprises: in a case where a plurality of reverse magnets are present, the plurality of reverse magnets being sequentially disposed on the outer side of the frame of a speaker along a first direction; or, the plurality of reverse magnets being sequentially disposed on the outer side of the frame of the speaker along a second direction different from the first direction.

For example, in a case where the reverse magnet is disposed in the groove, which is facing the forward magnet, of the wearing apparatus, the way in which the reverse magnet is disposed comprises: a plurality of reverse magnets being sequentially disposed in the groove of the wearing apparatus along a first direction; or a plurality of reverse magnets being sequentially disposed in the groove of the wearing apparatus along a second direction different from the first direction.

For example, the wearing apparatus comprises a first wearing subunit and a second wearing subunit; one end of the first wearing subunit is fixedly connected to one end of the host, and the other end of the first wearing subunit is fixedly connected to the other end of the host, and the acoustical device, the at least one reverse magnet, and the wire harness are located within the first wearing subunit; and one end of the second wearing subunit is fixedly connected to a top end of the host, and the other end of the second wearing subunit is fixedly connected to a middle position of the first wearing subunit.

For example, the first wearing subunit is an annular wearing subunit, and the second wearing subunit is a top wearing subunit.

For example, in a case where the first wearing subunit and the second wearing subunit are made of a hard material, the first wearing subunit and the second wearing subunit are of a cambered structure.

For example, the wire harness comprises a first power wire, a first ground wire, a second power wire, a second ground wire; the wire harness is located in a wiring structure; the wiring structure comprises a wiring layer at least comprising a first wiring sublayer and a second wiring sublayer that are bonded together; the first wiring sublayer comprises a first wiring region and a second wiring region; the second wiring sublayer comprises a third wiring region and a fourth wiring region; the first wiring region is used for laying the first power wire, and the second wiring region is used for laying the first ground wire; the third wiring region is used for laying the second power wire, and the fourth wiring region is used for laying the second ground wire; the first wiring region and the second wiring region are staggered; the third wiring region and the fourth wiring region are staggered; the first wiring region and the third wiring region are disposed crosswise; and the second wiring region and the fourth wiring region are disposed crosswise.

For example, the first wiring region is provided with N first power wires tilted in a first direction, and the second wiring region is provided with N first ground wires tilted in the first direction, wherein the N first power wires are spaced in parallel; the N first ground wires are spaced in parallel; the N first power wires and the N first ground wires are one by one alternately disposed in parallel according to a first arrangement order; and wherein N is a positive integer.

For example, the third wiring region is provided with N second power wires tilted in a second direction, and the fourth wiring region is provided with N second ground wires tilted in the second direction, wherein the N second power wires are disposed in parallel as being spaced apart; the N second ground wires are laid in parallel as being spaced apart; the N second power wires and the N second ground wires are one by one alternately disposed in parallel according to the first arrangement order; and the first direction is opposite to the second direction.

For example, each first power wire and one second power wire are disposed crosswise in an X form; and each first ground wire and one second ground wire are disposed crosswise in the X form.

For example, the wiring structure further comprises a first protective layer, a second protective layer, and a first insulating layer; a first adhesive layer is disposed between a first surface of the first wiring sublayer and the first protective layer such that the first surface of the first wiring sublayer is bonded to the first protective layer; a second adhesive layer is disposed on a second surface of the first wiring sublayer and one side of the first insulating layer such that the second surface of the first wiring sublayer is bonded to the side of the first insulating layer; a third adhesive layer is disposed on a third surface of the second wiring sublayer and the other side of the first insulating layer such that the third surface of the second wiring sublayer is bonded to the other side of the first insulating layer; and a fourth adhesive layer is disposed between a fourth surface of the second wiring sublayer and the second protective layer such that the fourth surface of the second wiring sublayer is bonded to the second protective layer.

For example, an elastic material is filled between the wearing apparatus and the wire harness.

For example, the wearing apparatus comprises a mounting housing and a band; the band is connected with the mounting housing; and the acoustical device is disposed within the mounting housing.

For example, the wearing apparatus further comprises a battery part which is disposed opposite to the host; the wearing apparatus is connected with the battery part; and the wire harness is connected between the battery part and the host for power supply and communication.

Additional aspects and advantages of the present disclosure will be set forth in part in the description which follows, and in part will be obvious from the description which follows, or may be learned by practice of the present disclosure.

### BRIEF DESCRIPTION OF DRAWINGS

The above and/or additional aspects and advantages of the present disclosure will become apparent and easy to understand from the description of the embodiments in conjunction with the following drawings.
Fig. 1A is a schematic diagram illustrating arrangement of a wiring in a wearing apparatus of a head-mounted device in the related art;
Fig. 1B is a schematic diagram illustrating a relative position of a wiring arranged in a wearing apparatus of a head-mounted device to a speaker in the related art;
Fig. 1C is a structural schematic diagram of a head-mounted device according to an embodiment of the present disclosure;
Fig. 2 is a schematic diagram illustrating a positional relationship of an acoustical device and a wire harness in the case where no spacer layer is provided in an embodiment of the present disclosure;
Fig. 3 is a simulation diagram of a magnetic field of the acoustical device and the wire harness in the case where no spacer layer is provided in the embodiment shown in Fig. 2 (the arrow in the figure representing the magnetic flux density);
Fig. 4 is a schematic diagram illustrating a magnetic bypass of a high magnetic permeability material in an embodiment;
Fig. 5 is a schematic diagram illustrating an influence on a magnetic field when a spacer layer is a composite layer in an embodiment;
Fig. 6 is a relationship diagram illustrating magnetic flux density changes in a cold-rolled carbon steel plate at different magnetic field intensities;
Fig. 7 is a schematic diagram of a wire harness according to an embodiment of the present disclosure;
Fig. 8 is a cross-sectional view of a wire harness according to an embodiment of the present disclosure;
Fig. 9 is an exploded view of an acoustical device according to an embodiment of the present disclosure;
Fig. 10 is a schematic diagram of a sound opposing side of an acoustical device according to an embodiment of the present disclosure;
Fig. **11** is a schematic diagram of the sound opposing side of the acoustical device in the embodiment shown in Fig. 10 with a spacer layer being disposed thereon;
Fig. 12 is a simulation diagram of magnetic flux leakages of an acoustical device after spacer layers of different materials are attached in one embodiment;
Fig. 13 is a schematic diagram of another wire harness of a head-mounted device according to an embodiment of the present disclosure;
Fig. 14 is a schematic diagram of another wire harness of a head-mounted device according to another embodiment of the present disclosure;
Fig. 15 is a schematic diagram of another wire harness of a head-mounted device according to further another embodiment of the present disclosure;
Fig. 16 is a schematic diagram illustrating an arrangement of another wire harness of a head-mounted device according to an embodiment of the present disclosure;
Fig. 17 is a schematic diagram illustrating an arrangement of another wire harness of a head-mounted device according to another embodiment of the present disclosure;
Fig. 18 is a schematic diagram of another head-mounted device provided by at least one embodiment of the present disclosure;
Fig. 19 is a schematic diagram of another head-mounted device provided by at least one embodiment of the present disclosure;
Fig. 20 is a schematic diagram illustrating a reverse magnet being disposed within a wearing unit provided by an embodiment of the present disclosure;
Fig. 21 is another schematic diagram illustrating a reverse magnet being disposed within a wearing unit provided by an embodiment of the present disclosure;
Fig. 22 is a schematic diagram illustrating a plurality of reverse magnets being disposed within a wearing unit provided by an embodiment of the present disclosure;
Fig. 23 is another schematic diagram illustrating a plurality of reverse magnets being disposed within a wearing unit provided by an embodiment of the present disclosure;
Fig. 24 is a further another schematic diagram illustrating a plurality of reverse magnets being disposed within a wearing unit provided by an embodiment of the present disclosure;
Fig. 25 is a still another schematic diagram illustrating a plurality of reverse magnets being disposed within a wearing unit provided by an embodiment of the present disclosure;
Fig. 26 is a back view of a speaker from a frame in an embodiment of the present disclosure;
Fig. 27 is a structural schematic diagram of a wiring layer provided by an embodiment of the present disclosure;
Fig. 28 is a structural schematic diagram of a first wiring sublayer provided by an embodiment of the present disclosure;
Fig. 29 is a structural schematic diagram of a second wiring sublayer provided by an embodiment of the present disclosure;
Fig. 30 is a structural schematic diagram of an entire wiring structure provided by an embodiment of the present disclosure;
Fig. 31 is a structural schematic diagram of a head-mounted device using a wiring structure provided by an embodiment of the present disclosure; and
Fig. 32 is a flowchart of a wiring method provided by an embodiment of the present disclosure.

### DETAILED DESCRIPTION

The embodiments of the present disclosure are described below in detail. Examples of the embodiments are shown in the drawings. The same or similar numerals represent the same or similar elements or elements having the same or similar functions throughout the specification. The embodiments described below with reference to the accompanying drawings are exemplary. These embodiments are merely used to explain the present disclosure, and should not be construed as a limitation to the present disclosure.

In the description of the present disclosure, it should be noted that, unless otherwise defined and limited, the terms "mount", "connect", "connection" should be understood broadly; for example, they may be a fixed connection, a detachable connection or an integrated connection; may be a mechanical connection or an electrical connection; and may be a direct connection, or an indirect connection through an intermediate medium, or an internal communication between two elements. For those skilled in the art, the specific meanings of the above terms in the present invention can be understood in specific situations.

To facilitate an understanding of embodiments by those skilled in the art, some terms are explained below.
(1) VCC: Volt Current Condenser, a power supply voltage.
(2) GND: Ground.
(3) FPC: Flexible Printed Circuit.
(4) FR4: the code of a flame resistant material grade, which is a material specification of a resin material which must be self-extinguished after being burnt.

For example, when a VR all-in-one machine is provided with a band as a wearing apparatus and a structural style in which a battery is disposed at a rear end is selected, the battery needs to be connected to a front head-mounted host by means of wiring to supply power to the head-mounted host. The wiring is used to connect the host and the battery on the front and rear sides. There are two wiring forms: one is to pass over the head, and the other one is to pass from a side of the head. When a battery wire passes from a side, since one acoustical device is provided on each of two sides of the VR all-in-one machine, the wiring is inevitably in close proximity to the acoustical device in result.

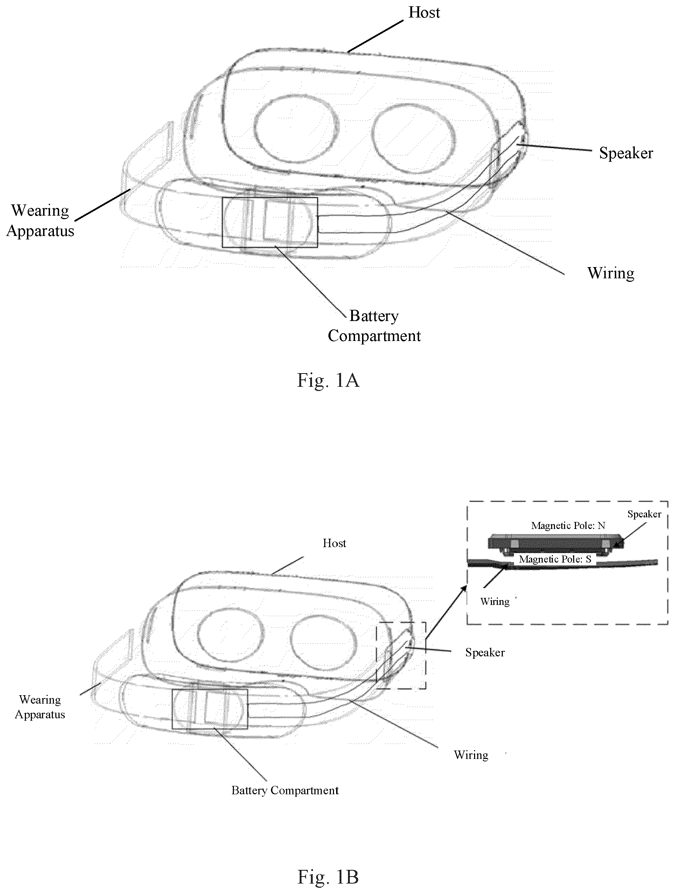

As shown in Fig. 1A, the wearing apparatus includes a battery compartment configured to store a power source, and the wiring is configured to connect the power source and the host. In the case where the wiring is arranged in the wearing apparatus of the head-mounted device, since speakers (i.e., acoustical devices) are disposed on two sides of the host, respectively, the wiring inevitably contacts the speakers. The partial structure of relative positions of the wiring to the speakers is specifically shown in Fig. 1B. Moreover, in the working process of the head-mounted device, a forward magnet in the speaker may generate a static magnetic field and a varying current flowing through a power supply wire may generate a varying magnetic field such that the wiring is pushed by forces in the magnetic fields to generate vibration noise, which may affect the use experience of the user.

Since the acoustical device is too close to the wiring and the acoustical device has a magnet with a magnetic field therearound, it is equivalent to place an energized conductor in the magnetic field when the wiring is energized. A varying current may generate a varying magnetic field, and the varying current may generate a varying Ampere force (a calculation method of an Ampere force: taking as an example that a power wire is a straight wire having a current I and a length L, the magnitude of the Ampere force acting on the power wire in uniform magnetic field B is as follows: F=ILBsinα, wherein α is (I,B), representing an included angle between a current direction and a magnetic field direction. For an acting force of a non-uniform magnetic field on a current in any shape, the current may be decomposed into many current elements IΔL, and the magnetic field B at each current element may be regarded as a uniform magnetic field, and the Ampere force acting on the current element is ΔF=IΔL·Bsinα; and these Ampere force vectors are added up to obtain the force acting on the entire current). Therefore, the energized wiring may be acted upon by an Ampere force, and the greater the varying current, the greater the Ampere force. The Ampere force pushes the wiring to vibrate for making sound. A speaker monomer with a magnet may be acted upon by a counter-acting force of the Ampere force to push the speaker to vibrate for making sound. An energized conductor is acted upon by an Ampere force in a magnetic field and once the magnetic field changes or the current changes, the magnitude of the Ampere force can be caused to change. The battery wire is prone to vibration and making noise under the action of the varying Ampere force. If the speaker is fixed well or its weight is relatively large, more vibration occurs in wiring. Therefore, most of noise of an XR all-in-one machine is originated from the vibration of the wiring in the energizing process.

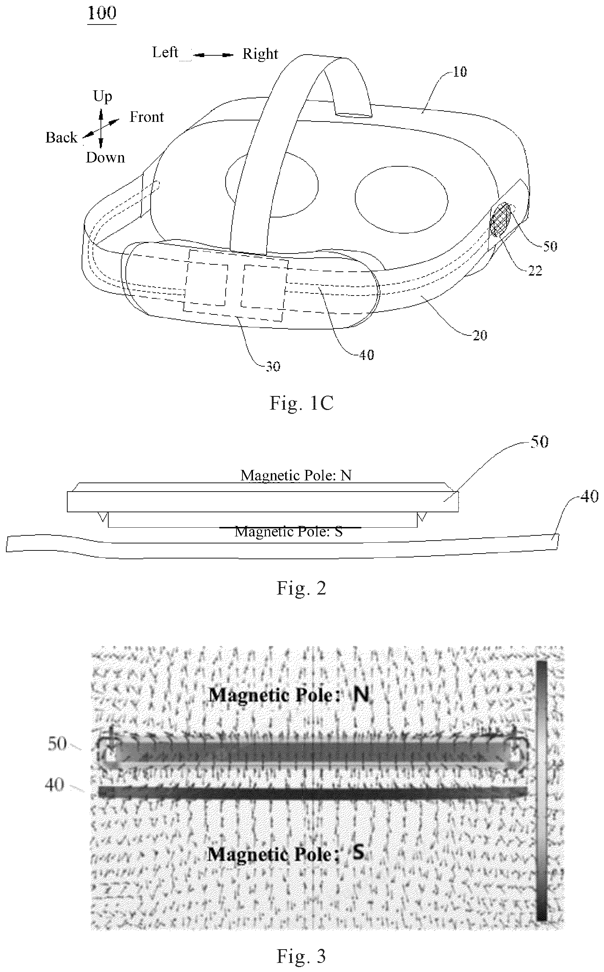

A head-mounted device 100 provided by some embodiments of the present disclosure is described below with reference to Fig. 1C and Figs. 2 to 12.

In the embodiments of the present disclosure, a type of the head-mounted device 100 is not defined, which may be any device worn on the head of a user, such as augmented reality (AR) glasses, an AR all-in-one machine, or virtual reality (VR) glasses, a VR all-in-one machine, and an extended reality (XR) device. The XR device may be a VR device, an augmented reality (AR) device, or a mix reality (MR) device, or the like. These devices are intelligent linking devices for a virtual world and the real world, help watch the real world and virtual contents, and can perform interaction of information such as visual information and auditory information.

The head-mounted device 100 according to the embodiments of the present disclosure, as shown in Fig. 1C, includes a host 10 and a wearing apparatus 20. The wearing apparatus 20 is connected to the host 10. Under normal conditions, the host 10 is worn on the face of a user, and the space defined between the wearing apparatus 20 and the host 10 is a head mount space.

That is to say, when the head-mounted device 100 is worn on the user, the head of the user is within the head mount space, and the wearing apparatus 20 and the host 10 are disposed around the head of the user.

For example, there are usually two wearing apparatuses 20. The two wearing apparatuses 20 are located on left and right sides of the host 10. In this way, the host 10 and the two wearing apparatuses 20 may be connected into a ring that can be placed around the head of the user, making the wearing of the head-mounted device 100 reliable. As a matter of course, the solution of only one wearing apparatus 20 being disposed on the head-mounted device 100 is not excluded in the present disclosure. In addition, when this head-mounted device 100 of the present disclosure is described for example, the description is made by taking as an example that the head-mounted device is worn on a human body. However, the solution of the head-mounted device 100 being worn on an animal is also not excluded in the present disclosure.

In the description of the present disclosure, it should be understood that orientation or position relationships indicated by terms such as "upper", "lower", "front", "rear", "left", "right", "length", "width", "thickness", "top", "bottom", "inside" and "outside" are based on what are illustrated in the drawings. These terms are merely intended to facilitate and simplify the description of the present disclosure, rather than to indicate or imply that the mentioned device or components must have a specific orientation or must be constructed and operated in a specific orientation. Therefore, these terms should not be understood as a limitation to the present disclosure.

With reference to Fig. 1C, an acoustical device 50 and a wire harness (also referred to as "wiring") 40 are disposed in the wearing apparatus 20. The wearing apparatus 20 further includes a spacer layer 22 which is located between the acoustical device 50 and the wire harness 40. The spacer layer 22 is a high magnetic permeability material layer.

For ease of understanding of the solutions of the present disclosure, the mutual effects of the acoustical device 50 and the wire harness 40 and the principle of disposing the spacer layer 22 are described below with reference to examples shown in the drawings.

As shown in Fig. 1C, when both of the acoustical device 50 and the wire harness 40 are disposed in the wearing apparatus 20, the wire harness 40 is disposed as extending along a length direction of the wearing apparatus 20. A segment of the wire harness 40 is located in proximity to the acoustical device 50, and this segment of the wire harness 40 may be directly in contact with the acoustical device 50. Taking the example shown in Fig. 2 and Fig. 3 as an example, a certain segment of the wire harness 40 is located in proximity to the acoustical device 50 and the two are spaced apart. Since a distance therebetween is too short, noise may be produced easily.

The cause of the noise is that a magnet is usually disposed in the acoustical device 50 and a static magnetic field is generated around the magnet. A current flows through the wire harness 40, and a value of the current may vary according to different use situations of the head-mounted device 100. The varying current will cause a varying magnetic field to be generated around the wire harness 40. As shown in Fig. 3, the static magnetic field of the acoustical device 50 and the magnetic field generated by the energized wire harness 40 affect each other, and both of the acoustical device 50 and the wire harness 40 are in the varying magnetic field.

A conductive part of the wire harness 40 is a conductor, and the energized conductor will be acted upon by a force in the magnetic field. The force is microscopically manifested as a lorentz force and macroscopically manifested as an Ampere force. A varying current will generate a varying Ampere force. The greater the varying current, the greater the generated varying Ampere force. The varying Ampere force will push the wire harness 40 to vibrate for making sound. The acoustical device 50 with the magnet will be acted upon by a counter-acting force of the Ampere force, and the counter-acting force will push the acoustical device 50 to vibrate, producing noise.

Moreover, since the wire harness 40 is relatively long, it is difficult to completely fix it. In some solutions, in order to avoid poor contact at joints of two ends of the wire harness 40 due to a too large stress, the wire harness 40 is designed to have a certain redundancy in length. Even in some solutions, in order to meet the wearing requirements of different users, the wearing apparatus 20 is flexible and the wire harness 40 needs to be deformable along with the wearing apparatus 20. Therefore, it is difficult to completely fix the wire harness 40, and it is unavoidable that the wire harness 40 vibrates in a varying magnetic field to produce noise. Here, the principle how a conductor generates an Ampere force in a varying magnetic field and the calculation method for the Ampere force are both prior art, which will not be specifically explained here.

In order to solve this technical problem, the solution of the present disclosure proposes that the spacer layer 22 is disposed on the wearing apparatus 20. As shown in Fig. 1C, the spacer layer 22 is located between the acoustical device 50 and the wire harness 40. The spacer layer 22 is a high magnetic permeability material layer.

A high magnetic permeability material refers to a magnetic material having a magnetic permeability of approximately above 100. Such a material requires high magnetic permeability, large saturated magnetic induction density, high resistance, low loss, good stability, and the like.

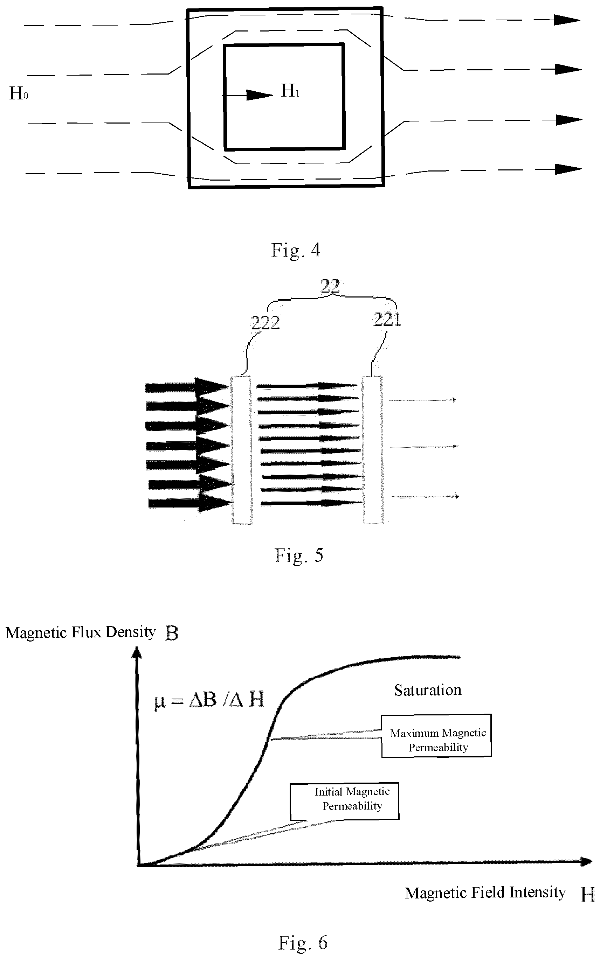

Since the magnetic permeability of the high magnetic permeability material layer is much greater than that of ambient air or a common material, when magnetic lines of force penetrate through the space of the high magnetic permeability material layer in a magnetic field, the magnetic lines of force are denser on the high magnetic permeability material layer, such that the density of magnetic lines of force in a region in the vicinity of the high magnetic permeability material layer can be reduced, and the magnetic field intensity in the region nearby can be weakened. For example, in the example shown in Fig. 4, assuming that the high magnetic permeability material layer is formed into a square frame, the high magnetic permeability material layer, when placed in a static magnetic field having a magnetic field intensity of H0, attracts magnetic lines of force to penetrate therethrough such that the magnetic field intensity in the middle region of the square frame is reduced to H1. Thus, the high magnetic permeability material layer provides certain magnetic shielding protection against the middle region.

Based on the above reason, in the present disclosure, the high magnetic permeability material layer is disposed between the acoustical device 50 and the wire harness 40.

For the acoustical device 50, the magnet disposed therein may generate a static magnetic field and thus is a key component for acoustoelectric conversion. The high magnetic permeability material layer is located between the acoustical device 50 and the wire harness 40. The high magnetic permeability material layer does not change a magnetic path of the acoustical device 50 and has less influence on the density distribution of magnetic lines of force therein. Moreover, due to the blockage of the high magnetic permeability material layer, an alternating magnetic field generated due to the change of the current in the wire harness 40 has reduced influence on the acoustical device 50, and the amplitude of vibration of the acoustical device 50 is reduced. Furthermore, since the acoustical device 50 is relatively short and can be fixed easily as compared to the wire harness 40, when the acoustical device 50 is connected steadily, it is more difficult to produce vibration noise.

For the wire harness 40, since the high magnetic permeability material layer is disposed on a side of the wire harness 40 facing the acoustical device 50, the high magnetic permeability material layer can significantly reduce the magnetic field intensity in the vicinity of the high magnetic permeability material layer. Especially blocked by the high magnetic permeability material layer, the influence of the static magnetic field of the acoustical device 50 on the wire harness 40 is significantly reduced.

Here, it also needs to be noted that because a traditional head-mounted device has few functions and a small current in the wire harness, the generated varying Ampere force is small and the vibration and noise problems of the wire harness are not prominent. It has not been conceived of how to reduce the vibration noise of the wire harness.

Taking earphones as an example, some headsets have storage batteries disposed therein. A storage battery is connected to acoustical devices on two sides of a headset by means of wires. The acoustical devices only have a sound making function, and the storage battery supplies a supply to the acoustical devices with low voltage value and current value. Moreover, the static magnetic fields of the magnets in the acoustical devices are weak. Therefore, in such a headset, due to the simple function, the influence of the magnetic field between the acoustical device and the wire is small, and the wire is not prone to vibration.

With the development of the modern technology, the functions of the head-mounted device 100 are gradually increased. Especially, the host 10 of an AR all-in-one machine and a VR all-in-one machine undertakes major functions of the virtual reality. The host 10 requires a very large current under some conditions. Moreover, to meet the requirements of the virtual reality, the static magnetic field of the acoustical device 50 is strong. Therefore, when the wire harness 40 is mounted in proximity to the acoustical device 50, the problem of vibration of the wire harness 40 caused by mutual influence of the magnetic field may be easily arisen. The solutions of the present disclosure are proposed based on the problem of the head-mounted device 100 in the development of the modern technology being solved.

In the head-mounted device 100 according to embodiments of the present disclosure, the spacer layer 22 is disposed between the acoustical device 50 and the wire hardness 40 on the wearing apparatus 20. The spacer layer 22 is the high magnetic permeability material layer. Due to the attraction of the high magnetic permeability, the distribution of magnetic lines of force around the wire harness 40 may be affected such that the magnetic lines of force at the wire harness 40 deviate to the high magnetic permeability material layer and the magnetic flux at the wire harness 40 is reduced. The magnetic field intensity in the vicinity of the wire harness 40 is significantly reduced and the varying Ampere force acting on the wire harness 40 is reduced, thereby reducing the amplitude of vibration of the wire harness 40. The noise produced by the vibration of the wire harness 40 is reduced. Moreover, the influence of the acoustical device 50 on the wire harness 40 is reduced, and the probability that the acoustical device 50 produces vibration noise is also reduced.

In the solutions of the present disclosure, the spacer layer 22 may include a cold-rolled carbon steel sheet which is made of SPCC material. SPCC is originally a steel name for "cold-rolled carbon steel sheet and steel strip for general purposes", and is directly used in many countries or enterprises to represent steel materials of the same type produced by them. The cold-rolled carbon steel sheet has high plasticity and high toughness, and has good welding performance and cold stamping property without temper brittleness. The cold-rolled carbon steel sheet may be applied to parts for bearing low loads and having high requirement on toughness.

In the solutions of the present disclosure, the spacer layer 22 may include a silicon steel plate. It will be appreciated that silicon alloy steel having a silicon content of 1.0% to 4.5% and a carbon content of less than 0.08% is called silicon steel. The spacer layer 22 is made of a silicon steel plate having characteristics of high magnetic permeability, low coercivity, large resistance coefficient, and the like and having low magnetic hysteresis losses and eddy losses.

In the solutions of the present disclosure, the spacer layer 22 may include a permalloy plate. The permalloy refers to an iron-nickel alloy having a nickel content between 35% and 90%. The spacer layer 22 includes a permalloy plate which may have a very high weak magnetic field permeability. Moreover, the permalloy plate may effectively control the magnetic performance have excellent plasticity, and can be manufactured into an ultrathin strip and various use shapes.

In the solutions of the present disclosure, the spacer layer 22 may include a nanocrystalline plate. Nanocrystalline refers to water insoluble nanoscale crystal generated by encapsulating calcium and magnesium ions, bicarbonates, and the like in water with high-energy polymeric spheres. The nanocrystalline plate is used as the spacer layer 22 and has the characteristics of high magnetic permeability, wide frequency characteristics, and the like.

In the solutions of the present disclosure, there may be one or at least two spacer layers 22. An actual thickness of each spacer layer 22 is selected as required.

When there is one spacer layer 22, the spacer layer 22 may be any one of a cold-rolled carbon steel sheet, a silicon steel plate, a permalloy plate, and a nanocrystalline plate. When there are a plurality of spacer layers 22, the spacer layers 22 may be one or more of the cold-rolled carbon steel sheet, the silicon steel plate, the permalloy plate, and the nanocrystalline plate. In the description of the present disclosure, unless otherwise specified, "a plurality of" means two or more.

In addition, the material of the spacer layer 22 in the present disclosure may also be not limited to the above-mentioned materials, and may also be selected from other high magnetic permeability materials.

In some embodiments, both of the acoustical device 50 and the wire harness 40 are located in the wearing apparatus 20. The acoustical device 50 has a sound outgoing side and a sound opposing side that are opposite to each other; the sound outgoing side of the acoustical device 50 is disposed facing the head mount space; and the wire harness 40 is located on the sound opposing side of the acoustical device 50. Here, both of the acoustical device 50 and the wire harness 40 are disposed in the wearing apparatus 20, and both of them may be protected by the wearing apparatus 20 and facilitate assembly.

The sound outgoing side of the acoustical device 50 is disposed facing the head mount space so that the sound produced by the acoustical device 50 can propagate to the ears of the user through a short path, thereby reducing power consumption. The wire harness 40 is disposed on the sound opposing side of the acoustical device 50 such that the wire harness 40 and the spacer layer 22 do not affect the propagation of the sound on the one hand, and on the other hand, after the spacer layer 22 is disposed, the spacer layer 22 is located on the sound opposing side of the acoustical device 50 with less influence on the magnetic path of the acoustical device 50.

Specifically, in the solution of Fig. 1C, the wearing apparatus 20 has a thickness, and a thickness direction of the acoustical device 50 is consistent with a thickness direction of the wearing apparatus 20. The acoustical device 50 has a small thickness such that the wearing apparatus 20 is thin. Two opposite sides of the acoustical device 50 in the thickness direction are the sound outgoing side and the sound opposing side, respectively. In this case, the wire harness 40 may be disposed on the sound opposing side of the acoustical device 50. That is, the wire harness 40 is located on a side of the acoustical device 50 away from the head mount space. That is to say, the acoustical device 50 and the wire harness 40 are arranged along the thickness direction of the wearing apparatus 20 within the wearing apparatus 20.

In some embodiments, the acoustical device 50 may be disposed on a surface of the wearing apparatus 20, or, the sound outgoing side of the acoustical device 50 extends out of the wearing apparatus 20, while the wire harness 40 is located in the wearing apparatus 20. Alternatively, in some embodiments, the acoustical device 50 is located in the wearing apparatus 20, while the wire harness 40 is fixed to a surface of the wearing apparatus 20. There is no limitation made thereto.

As a matter of course, the solutions of the present disclosure are not limited thereto. The wire harness 40 may also be disposed above or below the acoustical device 50. Thus, the wearing apparatus 20 may also be disposed into a relatively flat shape such that the head-mounted device 100 is thin as a whole.

Further, a magnet is disposed in the acoustical device 50, and a vertical projection of the spacer layer 22 on the sound opposing side of the acoustical device 50 at least covers a vertical projection of the magnet on the sound opposing side of the acoustical device 50. It needs to be noted that according to the characteristics of the magnetic path of the magnet in the acoustical device 50, the magnetic lines of force are relatively dense on the sound outgoing side and the sound opposing side of the acoustical device 50. Since the acoustical device 50 needs to propagate sound on the sound outgoing side, the spacer layer 22 is disposed on the sound opposing side of the acoustical device 50, and the projection may cover the magnet, and thus the magnetic shielding effect can be guaranteed when the area of the spacer layer 22 is small.

In the solutions of the present disclosure, the spacer layer 22 is preferably a solid plate so as to have enough toughness and strength and be not prone to deformation and displacement, guaranteeing its reduction effect for the magnetic field of the wire harness 40.

The solutions of the present disclosure may also be limited thereto. For example, the spacer layer 22 may be disposed to be reticular. The reticular spacer layer 22 may cover the acoustical device 50 or only cover the sound opposing side of the acoustical device 50.

In some embodiments, the spacer layer 22 is fixedly connected to the acoustical device 50. It will be appreciated, since the wire harness 40 is relatively long and is difficult to completely fix the wire harness 40, the spacer layer 22 is fixed to the acoustical device 50 such that the position of at least a segment of the spacer layer 22 adjacent to the acoustical device 50 is relatively fixed relative to the acoustical device 50.

The purpose of providing the spacer layer 22 is to weaken the influence of the magnetic field between the acoustical device 50 and the wire harness 40 so as to reduce the vibration of the wire harness 40. The position of the acoustical device 50 is fixed relative to the wire harness 40. The position of at least the segment of the spacer layer 22 adjacent to the acoustical device 50 is fixed relative to the acoustical device 50, which can help to retain the spacer layer 22 between the acoustical device 50 and the wire harness 40 and avoid the spacer layer 22 from moving to other positions along the length of the wire harness 40.

In some solutions, a frame is disposed in the wearing apparatus 20, the position of the acoustical device 50 is fixed relative to the frame. In this case, the spacer layer 22 may be disposed on the frame.

Specifically, the spacer layer 22 is fixed to the acoustical device 50 through an adhesive. The adhesive fixation is not only convenient, but also time-saving and labor-saving, and also space-saving.

As a matter of course, the spacer layer 22 in the solutions of the present disclosure may also be fixed in other manners, such as screw connection.

As mentioned above, there may be one or at least two spacer layers 22 in the present disclosure. When there are at least two spacer layers 22, two adjacent spacer layers 22 may be disposed as being spaced apart, and two adjacent spacer layers 22 may also be disposed next to each other. By flexibly disposing the spacer layers 22, diversified disposing forms can be obtained according to actual product requirements.

In some specific embodiments, as shown in Fig. 5, when there are at least two spacer layers 22, including a first spacer layer 221 and a second spacer layer 222, respectively, a magnetic permeability of the first spacer layer 221 is higher than a magnetic permeability of the second spacer layer 222, and a magnetic saturation of the second spacer layer 222 is higher than a magnetic saturation of the first spacer layer 221. That is to say, the spacer layer 22 is a composite layer, and a composite layer material is disposed between the wire harness 40 and the acoustical device 50, so that the magnetic field intensity in the vicinity of the wire harness 40 can be further reduced and the noise generated by the vibration of the wire harness 40 can be reduced. Moreover, in the present disclosure, features defined with "first" and "second" may explicitly or implicitly include one or more of the features.

In order to illustrate the advantages of the composite layer, the magnetic performance of a single magnetically conductive material is first analyzed here. Fig. 6 is a relationship diagram illustrating magnetic flux density changes in a cold-rolled carbon steel plate at different magnetic field intensities. When the magnetic field intensity H gradually increases, the magnetic flux density B of the cold-rolled carbon steel plate gradually increases first. When the magnetic field intensity reaches a certain value, the magnetic flux density B tends to be unchanged.

As well known to those skilled in the art, a magnetic permeability µ is equal to a ratio of a magnetic induction intensity B in a magnetically conductive material to a magnetic field intensity H, i.e., µ=B/H. Therefore, the magnetic permeability µ of the cold-rolled carbon steel plate is varying at different magnetic field intensities, and a calculation formula for the magnetic permeability µ is µ=ΔB/ΔH. When the magnetic field intensity is low, the magnetic permeability µ of the cold-rolled carbon steel plate is great; and when the magnetic field intensity reaches a certain value, the magnetic permeability µ tends to zero, and the cold-rolled carbon steel plate is in a magnetic saturation state. That is to say, when the magnetic saturation state is not reached, the magnetic permeability µ of the cold-rolled carbon steel plate is great. When magnetic saturation is reached, the magnetic permeability µ of the cold-rolled carbon steel plate is small.

As will be appreciated, it is difficult to keep high parameters in terms of both magnetic permeability and magnetic saturation for common magnetically conductive materials. If a magnetically conductive material has a high magnetic saturation, it is difficult to keep a high magnetic permeability of the magnetically conductive material. If a magnetic field of a magnet of an acoustical element is strong, only using a high magnetic permeability material layer with an extremely high magnetic permeability might lose the magnetic shielding function due to magnetic saturation.

In the solutions of the present disclosure, the spacer layer 22 is disposed as a composite layer and includes a first spacer layer 221 and a second spacer layer 222, and at least two magnetically conductive materials are selected and combined. The two materials may be complementary to each other to overcome shortcomings. Since the magnetic permeability of the first spacer layer 221 is higher than the magnetic permeability of the second spacer layer 222 and the magnetic saturation of the second spacer layer 222 is higher than the magnetic saturation of the first spacer layer 221, a high magnetic permeability is obtained with the first spacer layer 221 and a high magnetic saturation is obtained with the second spacer layer 222 in combined use. In this way, when the magnetic field intensity is low, a good shielding function can be achieved, and when the magnetic field intensity is high, the good shielding function can also be achieved. Thus, the vibration probability of the wire harness 40 can be further reduced, and the vibration noise can be reduced.

Specifically, when the spacer layer 22 includes the first spacer layer 221 and the second spacer layer 222 and the magnetic permeability of the first spacer layer 221 is higher than the magnetic permeability of the second spacer layer 222, the first spacer layer 221 may be located on a side of the second spacer layer 222 adjacent to the acoustical device 50. Since magnetic lines of force are denser at a shorter distance to the acoustical device 50, after the magnetic field intensity is reduced for the second spacer layer 222, the characteristic of high magnetic permeability of the first spacer layer 221 can be brought into full play.

When there are a greater number of spacer layers 22, they may be combined in a plurality of forms, which will not be defined here. When the spacer layer 22 is a composite layer, a cold-rolled carbon steel sheet, a silicon steel plate, a permalloy plate, and a nanocrystalline plate may be selected and combined.

Specifically, when there are at least two spacer layers 22, two adjacent spacer layers 22 are connected by means of an adhesive; the wire harness 40 is connected to the spacer layer 22 by means of the adhesive; and the spacer layer 22 is connected to the acoustical device 50 by means of the adhesive. Adhesive fixation may cause the relative position of adjacent spacer layers 22 to be fixed such that all the spacer layers 22 are fixed relative to the acoustical device 50 and the wire harness 40 is fixed relative to the spacer layer 22 at an adhesive connection position. Here, not only is the strength of the overall structure high, but also a strong shielding effect can be kept.

In the solutions of the present disclosure, the wearing apparatus 20 may be band-shaped and worn on left and right sides of the head of the user. As a matter of course, the solutions of the present disclosure are not limited thereto. For example, in some solutions, the wearing apparatus 20 is cap-like and is worn on the top of the head of the user. The wearing apparatus 20 may be a flexible part, and thus is more comfortable for wearing, and can be widely applicable. The wearing apparatus 20 may also be a hard part. An accommodating cavity is disposed in the wearing apparatus 20 for mounting the wire harness 40.

In some optional embodiments, the wearing apparatus 20 includes a mounting housing and a band. The band is connected with the mounting housing. The acoustical device 50 is disposed within the mounting housing. The mounting housing may protect the acoustical device 50, thereby being conducive to guarantee the mounting reliability and stability of the acoustical device 50. Thus, the use reliability of the head-mounted device 100 is guaranteed.

As shown in Fig. 1C, according to some embodiments of the present disclosure, the head-mounted device 100 further includes a battery part 30. The battery part 30 is disposed relative to the host 10. The battery part 30 is connected to a rear end of the wearing apparatus 20, and the host 10 is connected to a front end of the wearing apparatus 20. A space defined by the battery part 30, the wearing apparatus 20 and the host 10 is the head mount space. That is to say, when the head-mounted device 100 is worn on the user, the head of the user is within the head mount space, and the battery part 30, the wearing apparatus 20 and the host 10 are disposed around the head of the user.

In the solutions of the present disclosure, there are usually two wearing apparatuses 20. The two wearing apparatuses 20 are located on left and right sides of the host 10. In this way, the host 10, the two wearing apparatuses 20 and the battery part 30 may be connected into a ring that can be placed around the head of the user, making the wearing of the head-mounted device 100 reliable. Also in some solutions, there is one wearing apparatus 20, i.e., the wearing apparatus 20 is only disposed on a single side of the host 10 and the battery part 30, the head-mounted device 100 can also be worn steadily.

Optionally, an elastic material is filled between the wearing apparatus 20 and the wire harness 40. That is to say, the accommodating cavity is defined within the wearing apparatus 20, and the elastic material is filled between the wire harness 40 and a wall surface of the accommodating cavity. Further optionally, the elastic material is disposed on two sides of the wire harness 40 in the thickness direction of the wearing apparatus 20. Alternatively, the four sides of the wire harness 40 are enclosed with the elastic material so that the amplitude of the vibration of the wire harness 40 can be reduced, thereby reducing the noise.

In addition, apart from the segment adjacent to the acoustical device 50, other segments of the wire harness 40 may be fixed by a flexible glue. A plurality of types of flexible glues may be selected, and the main requirements are high viscosity and low hardness. For example, silica gel and explosion-proof clay may be selected. Specifically, an injection molding process with fluid silicone rubber may be adopted to fill the fluid silicone rubber between the wearing apparatus 20 and the wire harness 40. After cooling and curing, two sides of the wire harness 40 or the whole wire harness are covered with the flexible glue.

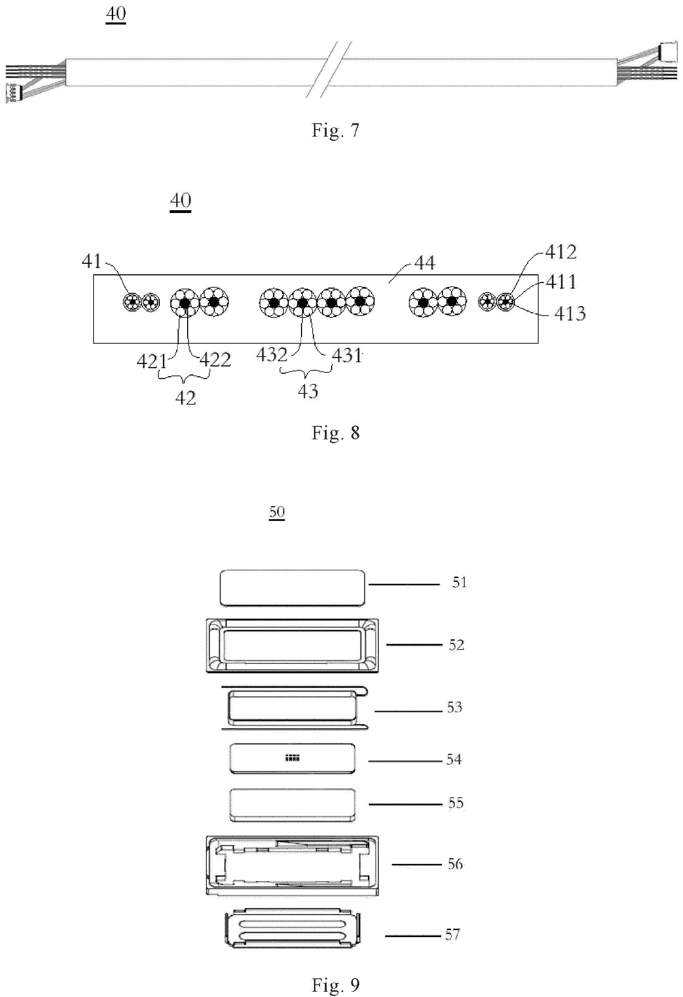

Fig. 7 illustrates a schematic diagram of a wire harness 40 provided by some embodiments of the present disclosure, and Fig. 8 illustrates a cross-sectional view of the wire harness 40.

As shown in Fig. 7 and Fig. 8, the wire harness 40 includes a signal wire 41, a signal lead 411, a shielding layer 412, a first filler 413, a ground wire 42, a ground lead 421, a third filler 422, a power wire 43, a power led 431, a second filler 432, and a jacket 44.

A structure of a head-mounted device 100 in one specific embodiment is described below with reference to Fig. 1C and Figs. 9 to 12.

As shown in Fig. 1C, the head-mounted device 100 includes a host 10, a wearing apparatus 20, and a battery part 30. The host 10 is configured to be worn on the face of the user. The battery part 30 is disposed relative to the host 10 and worn on the rear side of the head of the user. A front end of the wearing apparatus 20 is connected to the host 10, and the battery part 30 is connected to a rear end of the wearing apparatus 20. An acoustical device 50 for making sound to the ears of the user is disposed in the wearing apparatus 20. The battery part 30 has a wire harness 40. The wire harness 40 is disposed in the wearing apparatus 20 and connected to the host 10. The wearing apparatus 20 includes a spacer layer 22 which is located between the acoustical device 50 and the wire harness 40. The spacer layer 22 is a high magnetic permeability material layer.

As shown in Fig. 9, the acoustical device 50 includes a top cap 51, a vibrating diaphragm 52, a voice coil 53, a washer 54, a magnet 55, a housing 56, and a frame 57. The acoustical device 50 is assembled into a flat square part. A side of the acoustical device 50 at the top cap 51 is a sound outgoing side and a side thereof at the frame 57 is a sound opposing side. Here, the materials of various components are not limited. For example, the top cap 51 and the vibrating diaphragm 52 are composite material parts. The voice coil 53 and the housing 56 are plastic parts. The washer 54 and the frame 57 are SPCC parts.

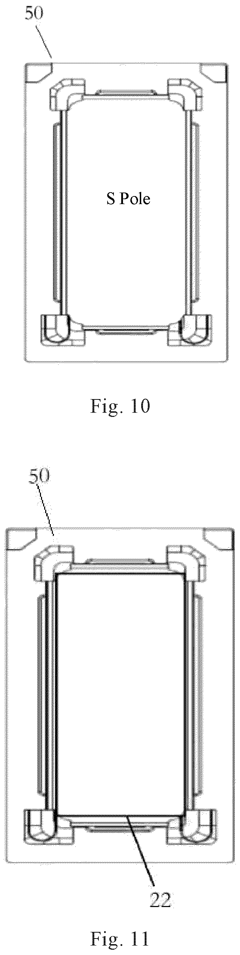

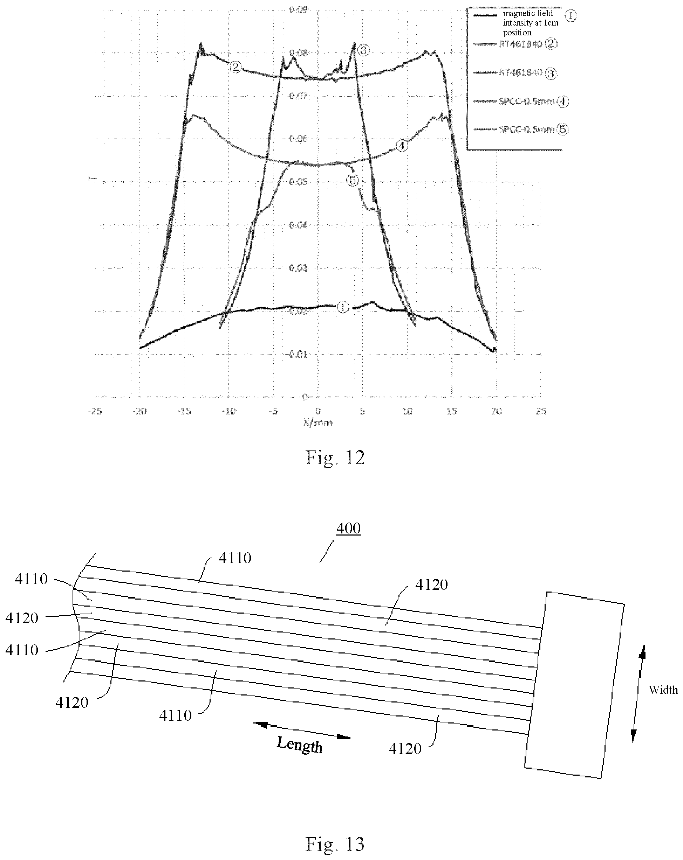

Specifically, in a static magnetic field of the acoustical device 50, N-pole is located at the sound outgoing side, and S-pole is located at the sound opposing side. Fig. 10 illustrates a structural diagram of sound opposing side of the acoustical device 50. When the spacer layer 22 is disposed on the sound opposing side of the acoustical device 50, its structural diagram is as shown in Fig. 11. Fig. 12 is a simulation diagram of magnetic flux leakages of the acoustical device 50 after spacer layers 22 of different materials are attached.

To sum up, this head-mounted device 100 of the present disclosure can greatly reduce the vibration noise of the wire harness 40 with the spacer layer 22.

In some embodiments of the present disclosure, the wire harness is located in a power wire assembly. The wire harness includes at least one first wire and at least one second wire. Fig. 13 illustrates an internal structural diagram of another wire harness 400 provided by some embodiments of the present disclosure.

As shown in Fig. 13, the wire harness 400 includes at least one first wire 4110 and at least one second wire 4120.

The cause of the noise is that the parts of the head-mounted device 100 usually include a magnet and a static magnetic field is generated around the magnet. A current flows through the wire harness 400. According to different use situations of the head-mounted device 100, a value of the current may vary. The varying current will cause a varying magnetic field to be generated around the wire harness 400.

A conductive part of the wire harness 400 is a conductor, and the energized conductor will be acted upon by a force in the magnetic field. The force is microscopically manifested as a lorentz force and macroscopically manifested as an Ampere force. A varying current will generate a varying Ampere force. The greater the varying current, the greater the generated Ampere force. The Ampere force will push the wire harness 400 to vibrate for making sound.

Moreover, since the wire harness 400 is relatively long, in order to avoid poor contact at joints of two ends of the wire harness 400 due to a too large stress, the wire harness 400 is usually designed to have a certain redundancy in length. Even in some solutions, in order to meet the wearing requirements of different users, the wearing apparatus 20 is flexible and the wire harness 400 needs to be deformable along with the wearing apparatus 20. Therefore, it is difficult to completely fix the wire harness 400, and it is unavoidable that the wire harness 400 vibrates in a varying magnetic field to produce noise. Here, the principle how a conductor generates an Ampere force in a varying magnetic field and the calculation method for the Ampere force are both prior art, which will not be specifically explained here.

To solve this technical problem, as shown in Fig. 13, in some embodiments of the present disclosure, the first wire 4110 is disposed adjacent to at least one second wire 4120, and/or the second wire 4120 is disposed adjacent to at least first wire 4110.

In the head-mounted device 100 according to the embodiments of the present disclosure, since the first wire 4110 is disposed adjacent to at least one second wire 4120 and the second wire 4120 is disposed adjacent to at least first wire 4110, the counter Ampere force acting on the first wire 4110 and the second wire 4120 can be approximately counteracted. Thus, the force acting on the wire harness 400 is greatly reduced, thereby reducing the amplitude of the vibration of the wire harness 400 and reducing the noise problem caused by the vibration of the wire harness 400.

In the present disclosure, since the first wire 4110 is disposed adjacent to at least one second wire 4120 and the second wire 4120 is disposed adjacent to at least first wire 4110, the counter Ampere force acting on the first wire 4110 and the second wire 4120 can be approximately counteracted. Thus, the amplitude of the vibration of the wire harness 400 can be reduced. After the influence of the wire harness 400 on the acoustical device 50 is reduced, the probability that the acoustical device 50 produces vibration noise will also be reduced.

According to some embodiments of the present disclosure, one of the first wire 4110 and the second wire 4120 is a positive connecting wire and the other one of the first wire 4110 and the second wire 4120 is a negative connecting wire.

Specifically, the wire harness 400 connects the battery part 30 and the host 10 so that the battery part 30 can supply power to the host 10. One of the first wire 4110 and the second wire 4120 is connected between a negative electrode of the battery part 30 and the host 10, and the other one of the first wire 4110 and the second wire 4120 is connected between a negative electrode of the battery part 30 and the host 10.

Since the first wire 4110 and the second wire 4120 are connected to the negative electrode and the negative electrode of the battery part 30, respectively, i.e., when energized, a current direction of the first wire 4110 is opposite to a current direction of the second wire 4120, the first wire 4110 and the second wire 4120 will be acted upon by opposite Ampere forces. Since the first wire 4110 is disposed adjacent to at least one second wire 4120 and the second wire 4120 is disposed adjacent to at least first wire 4110, the counter Ampere force acting on the first wire 4110 and the second wire 4120 can be approximately counteracted. Thus, the force acting on the wire harness 400 is greatly reduced, thereby reducing the amplitude of the vibration of the wire harness 400 and reducing the noise problem caused by the vibration of the wire harness 400.

As shown in Fig. 13, according to some embodiments of the present disclosure, at least part of the first wires 4110 and at least part of the second wires 4120 are arranged alternately in a width direction of the wearing apparatus 20.

For example, there may be one first wire 4110 and one second wire 4120, and the first wire 4110 and the second wire 4120 are arranged alternately in the width direction of the wearing apparatus 20. For another example, there may be one first wire 4110 and a plurality of second wires 4120, and the first wire 4110 and at least one of the second wires 4120 are arranged alternately in the width direction of the wearing apparatus 20. For further another example, there may be a plurality of first wires 4110 and one second wire 4120, and the second wire 4120 and at least one of the first wires 4110 are arranged alternately in the width direction of the wearing apparatus 20.

In some embodiments, there may be a plurality of first wires 4110 and a plurality of second wires 4120. In part of the plurality of first wires 4110 and part of the plurality of second wires 4120, one second wire 4120 is disposed between two adjacent first wires 4110, and one first wire 4110 is disposed between two adjacent second wires 4120.

The current directions of pairwise close first wire 4110 and second wire 4120 are opposite. According to the left-hand rule, the Ampere forces generated by them are opposite. The Ampere forces acting on the pairwise close first wire 4110 and second wire 4120 are approximately equal and opposite in direction and thus can be approximately counteracted. Thus, the force acting on the wire harness 400 can be greatly weakened, thereby improving the noise problem.

As shown in Fig. 13, in some embodiments, all of the plurality of first wires 4110 and all of the plurality of second wires 4120 are arranged alternately in the width direction of the wearing apparatus 20.

In other words, all of the plurality of first wires 4110 and all of the plurality of second wires 4120 are arranged in a single wire harness layer. A thickness direction of the single wire harness layer is consistent with the thickness direction of the wearing apparatus 20, a width direction of the single wire harness layer is consistent with the width direction of the wearing apparatus 20, and a length direction of the single wire harness layer is consistent with the length direction of the wearing apparatus 20. Not only can the noise problem be improved, but also the utilization ratio of the internal space of the wearing apparatus 20 can be increased on the basis of keeping the size of the wearing apparatus 20 unchanged.

In some embodiments, the wire harness 400 includes a plurality of wire harness layers that are arranged in the thickness direction of the wearing apparatus 20. At least part of the first wires 4110 and at least part of the second wires 4120 in each wire harness layer are arranged alternately in the width direction of the wearing apparatus 20, thereby further guaranteeing that the forces acting on the first wires 4110 and the second wires 4120 can be counteracted and alleviating the noise problem.

For example, the wire harness 400 may include two wire harness layers. Each of the two wire harness layers includes a plurality of first wires 4110 and a plurality of second wires 4120, and the plurality of first wires 4110 and the plurality of second wires 4120 in each wire harness layer may be arranged alternately in the width direction of the wearing apparatus 20. As a matter of course, the number of wire harness layers may also be three or more, which may be specifically adjusted according to the size of the wire and the size of the wearing apparatus.

The plurality of first wires 4110 in two adjacent wire harness layers are arranged directly facing each to each, and the plurality of second wires 4120 in two adjacent wire harness layers are arranged directly facing each to each. Alternatively, the plurality of first wires 4110 in two adjacent wire harness layers are arranged as being staggered in the width direction of the wearing apparatus 20, and the plurality of second wires 4120 in two adjacent wire harness layers are arranged as being staggered in the width direction of the wearing apparatus 20. Specifically, adjustment may be made according to an actual situation.

As a matter of course, one of two wire harness layers may include one first wire 4110 and the other wire harness layer may include one second wire 4120, and the first wire 4110 and the second wire 4120 are arranged in the thickness direction of the wearing apparatus 20. Alternatively, one of two wire harness layers may include one first wire 4110 and the other wire harness layer may include a plurality of second wires 4120, and the plurality of second wires 4120 may be arranged in juxtaposition in the width direction of the wearing apparatus 20, and the first wire 4110 and the second wires 4120 are arranged in the thickness direction of the wearing apparatus 20. Alternatively, one of two wire harness layers may include a plurality of first wires 4110 and the other wire harness layer may include one second wire 4120, and the plurality of first wires 4110 may be arranged in juxtaposition in the width direction of the wearing apparatus 20, and the first wires 4110 and the second wire 4120 are arranged in the thickness direction of the wearing apparatus 20.

In some embodiments, the number of the first wires 4110 may be equal or unequal to the number of the second wires 4120. For example, the number of the first wires 4110 and the number of the second wires 4120 may both be three or four. For another example, the number of the first wires 4110 is three and the number of the second wires 4120 is four. For further another example, the number of the first wires 4110 is four and the number of the second wires 4120 is three.

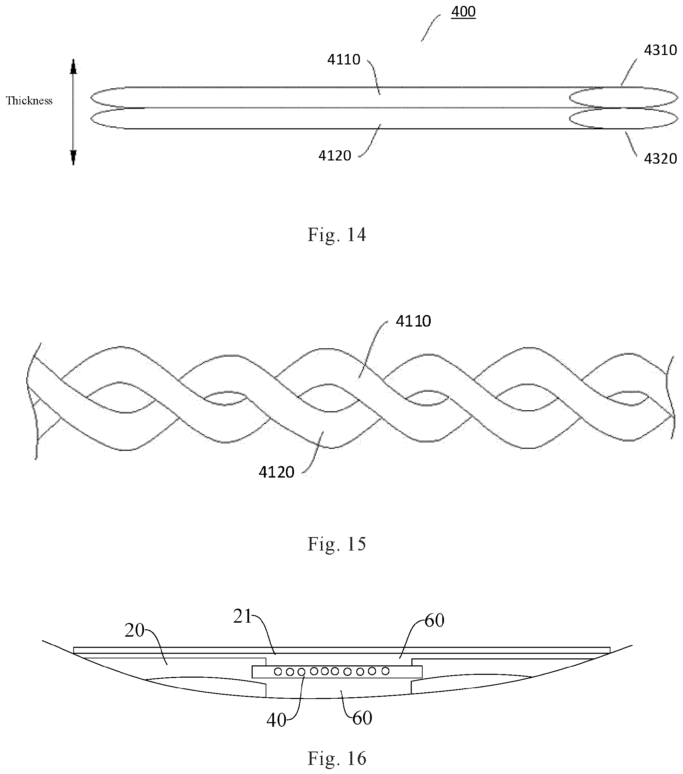

As shown in Fig. 14, according to some other embodiments of the present disclosure, the wire harness 400 includes a first wire group 4310 and a second wire group 4320. The first wire group 4310 and the second wire group 4320 are arranged in the thickness direction of the wearing apparatus 20.

In some examples, the first wire group 4310 includes one first wire 4110. In some other examples, the first wire group 4310 includes a plurality of first wires 4110. The plurality of first wires 4110 are arranged in juxtaposition in the width direction of the wearing apparatus 20 such that the plurality of first wires 4110 forms the first wire group 4310.

In some examples, the second wire group 4320 includes one second wire 4120. In some other examples, the second wire group 4320 includes a plurality of second wires 4120. The plurality of second wires 4120 are arranged in juxtaposition in the width direction of the wearing apparatus 20 such that the plurality of second wires 4120 forms the second wire group 4320.

That is to say, all the first wires 4110 and all the second wires 4120 are arranged in two rows in the thickness direction of the wearing apparatus 20, wherein the first row includes one or more first wires 4110 arranged in juxtaposition in the width direction of the wearing apparatus 20 and the second row includes one or more second wires 4120 arranged in juxtaposition in the width direction of the wearing apparatus 20.

In the embodiment in which the first wire group 4310 includes a plurality of first wires 4110 and the second wire group 4320 includes a plurality of second wires 4120, the plurality of first wires 4110 and the plurality of second wires 4120 may be disposed directly facing each to each and adjacently in the thickness direction of the wearing apparatus 20. Since the Ampere forces acting on the pairwise close first wire 4110 and second wire 4120 are approximately equal and opposite in direction, the force acting on the wire harness 400 can be approximately counteracted. Thus, the vibration is reduced, thereby improving the noise problem.

As shown in Fig. 15, according to some other embodiments of the present disclosure, the first wire 4110 and at least one second wire 4120 are spirally arranged crosswise, i.e., the first wire 4110 and at least one second wire 4120 are disposed as being wound; and/or the second wire 4120 and at least one first wire 4110 are spirally arranged crosswise, i.e., the second wire 4120 and at least one first wire 4110 are disposed as being wound. Not only can the compactness of the arrangement of the first wires 4110 and the second wires 4120 be guaranteed, but also the Ampere forces acting on the pairwise close first wire 4110 and second wire 4120 can be counteracted, and the noise problem can be improved.

In some embodiments, the count of the first wires 4110 is equal to the count of the second wires 4120, and a plurality of first wires 4110 and a plurality of second wires 4120 are spirally arranged crosswise each to each. That is to say, the plurality of first wires 4110 and the plurality of second wires 4120 are spirally arranged crosswise in pairs, thereby forming a plurality of twisted-pair structures.

The plurality of twisted-pair structures may be arranged in juxtaposition in the width direction of the wearing apparatus 20. Not only can the noise problem be improved, but also the utilization ratio of the internal space of the wearing apparatus 20 can be increased on the basis of keeping the size of the wearing apparatus 20 unchanged.

It needs to be noted that the arrangement of the plurality of first wires 4110 and the plurality of second wires 4120 according to the embodiments of the present disclosure may be set according to an actual space requirement, which will not be specifically defined here.

According to some embodiments of the present disclosure, the first wire 4110 and/or the second wire 4120 is/are covered with a protective layer; and the protective layer includes a rubber layer, a plastic layer, or a carbon fiber layer. For example, the protective layer may be specifically made of Teflon or thermoplastic elastomer (TPE), or the like. The amplitude of the vibration of the first wire 4110 and/or the second wire 4120 is reduced, thereby reducing the noise.

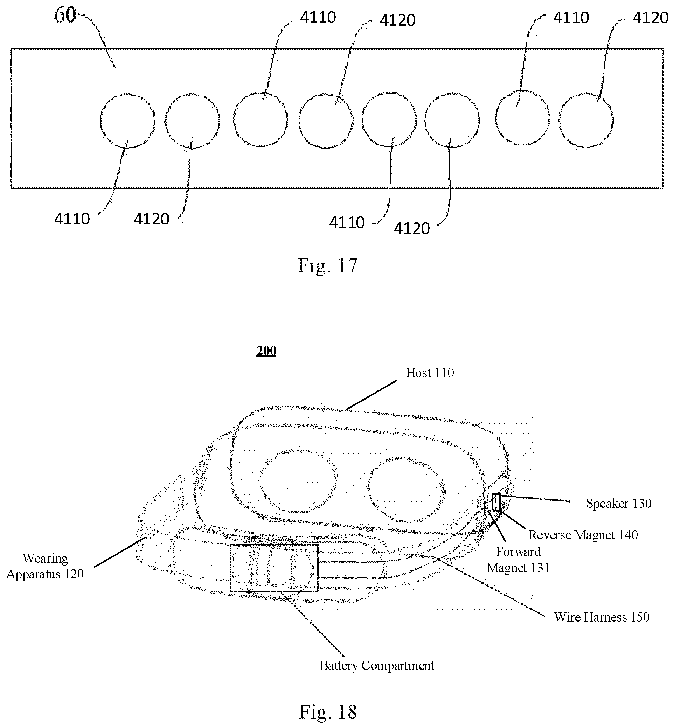

As shown in Figs. 16 and 17, according to some embodiments of the present disclosure, an elastic material 60 is filled between the wearing apparatus 20 and the wire harness 400. That is to say, the accommodating cavity 21 is defined within the wearing apparatus 20, and the elastic material 60 is filled between the wire harness 400 and a wall surface of the accommodating cavity 21.

In some embodiments, the elastic material 60 is disposed on two sides of the wire harness 400 in the thickness direction of the wearing apparatus 20. Alternatively, the four sides of the wire harness 400 are all enclosed with the elastic material 60 so that the amplitude of the vibration of the wire harness 400 can be reduced, thereby reducing the noise.

In some embodiments, the wire harness 400 may be fixed by a flexible glue. A plurality of types of flexible glues may be selected, and the main requirements are high viscosity and low hardness. For example, silica gel and explosion-proof clay may be selected. Specifically, an injection molding process with fluid silicone rubber may be adopted to fill the fluid silicone rubber between the wearing apparatus 20 and the wire harness 400. After cooling and curing, two sides of the wire harness 400 or the whole wire harness are covered with the flexible glue.

Fig. 18 illustrates a schematic diagram of another head-mounted device 200 provided by at least one embodiment of the present disclosure.

As shown in Fig. 18, the head-mounted device 200 includes a host 110 and a wearing apparatus 120.

The wearing apparatus 120 includes a speaker (i.e., an acoustical device) 130, a wire harness 150, and at least one reverse magnet 140. The at least one reverse magnet 140 repels a forward magnet in the acoustical device.

A host unit 110 is connected with the wearing apparatus 120. The speaker 130, at least one reverse magnet 140 repelling the forward magnet 131 in the speaker 130, and a wire 150 for supplying power to the host unit 110 are disposed within the wearing apparatus 120.

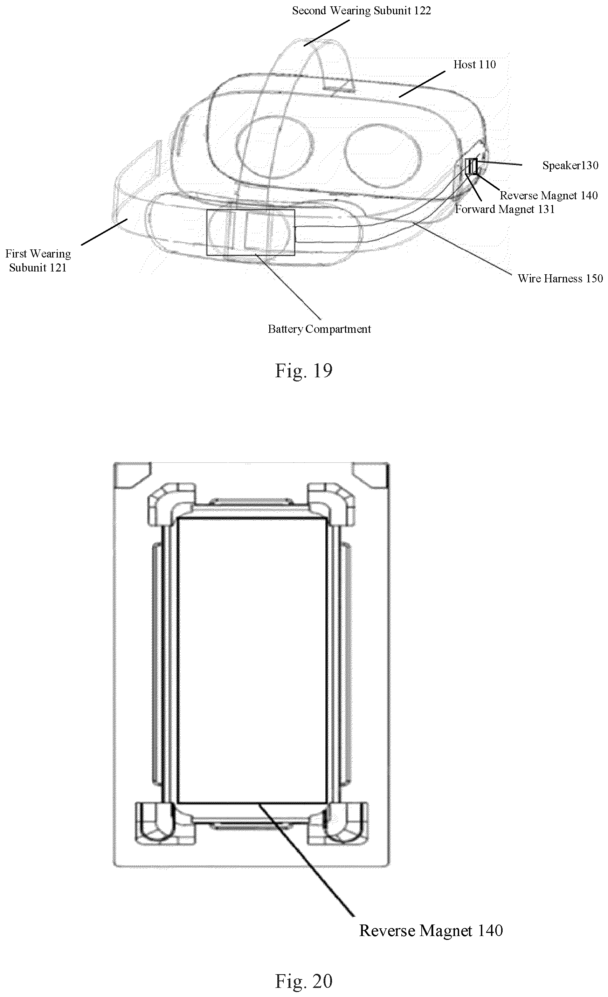

As shown in Fig. 19, the wearing apparatus 120 includes a first wearing subunit 121 and a second wearing subunit 122.

One end of the first wearing subunit 121 is fixedly connected to one end of the host unit 110, and the other end of the first wearing subunit 121 is fixedly connected to the other end of the host unit 110, and the speaker 130, at least one reverse magnet 140 repelling the forward magnet 131 in the speaker 130, and the wire 150 for supplying power to the host unit 110 are disposed within the first wearing subunit 121. One end of the second wearing subunit 122 is fixedly connected to a top end of the host unit 110, and the other end of the second wearing subunit 122 is fixedly connected to a middle position of the first wearing subunit 121.

For example, the first wearing subunit 121 is an annular wearing subunit, and the second wearing subunit 122 is a top wearing subunit, specifically as shown in Fig. 19. Thus, the host unit 110 may be better fixed to the head of the user through the annular wearing subunit and the top wearing subunit.

For example, the first wearing subunit 121 and the second wearing subunit 122 may be selected to be flexible fixing bands, and the host unit 110 may be well fixed to the head of the user by means of the flexible fixing bands.

For another example, the portions of the first wearing subunit 121 fixedly connected to two sides of the host unit 110 may be selected to be made of a hard material, and the remaining portion may be selected to be the flexible fixing band. The second wearing subunit 122 may be selected to be the flexible fixing band. Thus, the speaker 130 and at least one reverse magnet 140 repelling the forward magnet 131 in the speaker 130 may be disposed in the hard material more conveniently.

For another example, the first wearing subunit 121 and the second wearing subunit 122 may be selected to be fixing units of a hard material. Moreover, the fixing unit of the hard material may be selected to be a cambered structure and thus formed into a helmet shape such that the wearing apparatus 120 in the helmet shape can be better fit the head of the head of the wearer.

In a practical use process, in consideration that the forward magnet 131 in the speaker 130 within the wearing apparatus 120 may generate a static magnetic field in the working process of the head-mounted device, a varying current flowing through the wire 150 will generate a varying magnetic field. The wire 150 may be then pushed by a force in the magnetic field to produce vibration noise. The force is microscopically a lorentz force and macroscopically an Ampere force. A calculation method of an Ampere force is as follows: it is assumed that a current is I and a length of the wire 150 is L. The magnitude of the Ampere force in a uniform magnetic field B is F=I*L*B*sinα, wherein α is (I,B), representing an included angle between a current direction and a magnetic field direction. The direction of the Ampere force is determined by the left-hand rule. For an acting force of a non-uniform magnetic field on a current in any shape, the current may be decomposed into many current elements I*ΔL, and the magnetic field B at each current element may be regarded as a uniform magnetic field, and the corresponding Ampere force is ΔF=I*ΔL*B*sinα. Then, all Ampere force vectors are added up to obtain the force acting on the entire current.

That is to say, a varying current may generate a varying Ampere force. The greater the varying current, the greater the Ampere force, and correspondingly, the wire 150 will be pushed by different Ampere forces to produce vibration noise at different intensities.

Based on the above reasons, in some embodiments of the present disclosure, by disposing at least one reverse magnet 140 repelling the forward magnet 131 in the speaker 130 within the wearing apparatus 120, the direction of the magnetic lines of force around the wire 150 can be changed by using the reverse magnet 140 in the working process of the head-mounted device, so that the magnetic flux around the wire 150 can be reduced, the magnetic field intensity around the wire 150 is abated, thereby reducing and even eliminating the Ampere force pushing the wire 150. Thus, the purpose of reducing and even eliminating the vibration noise produced due to the wire 150 being pushed by the Ampere force is achieved so as to enhance the use experience of the user.

For a clearer description, in some embodiments of the present disclosure, by disposing at least one reverse magnet 140 within the first wearing subunit 121 of the wearing apparatus 120, the direction of the magnetic lines of force around the wire 150 is changed through the reverse magnet 140 to achieve the technical effect of reducing and even eliminating the vibration noise produced due to the wire 150 being pushed by the Ampere force. A way in which at least one reverse magnet 140 is disposed within the first wearing subunit 121 is described in detail below with reference to Figs. 20 to 26.

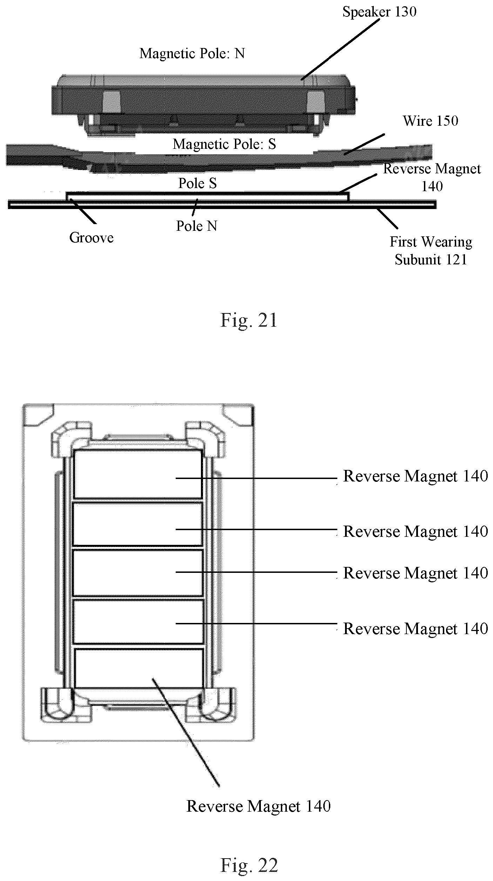

In consideration of the number of at least one reverse magnet 140 being one or more, based on Figs. 20 and 21, firstly, when there is one reverse magnet 150, the way in which the reverse magnet 140 is disposed within the first wearing subunit 121 is described.

A single structure of the speaker 130 includes a dust cover, a vibrating diaphragm, a voice coil, a washer, a magnet (forward magnet), a housing, and a frame, specifically as shown in Fig. 9. The dust cover and the vibrating diaphragm are made of a composite material, the voice coil and the housing are made of a plastic material, and the washer and the frame are made of the SPCC (cold-rolled carbon steel sheet and steel strip for general purposes) material.

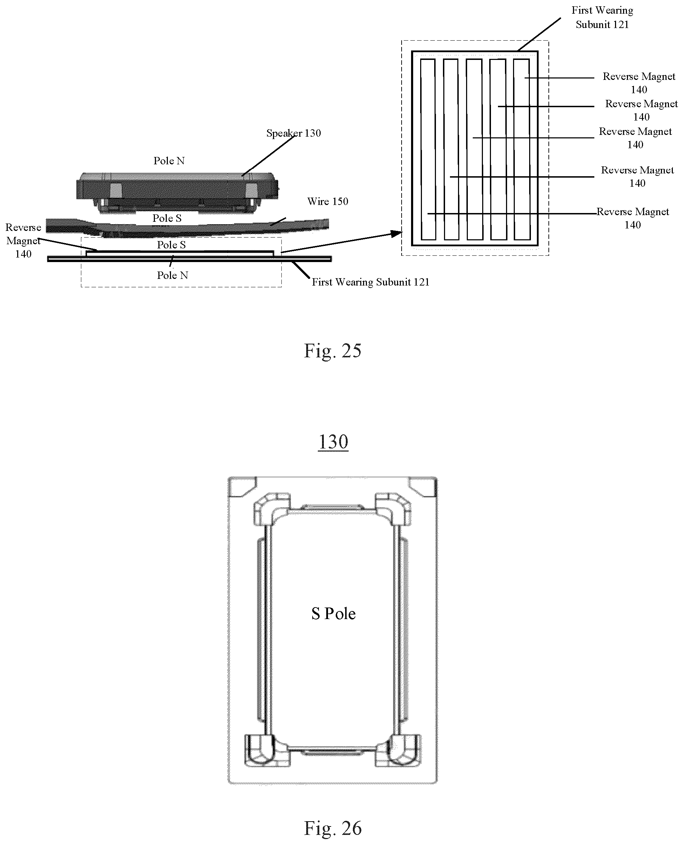

Fig. 26 is a back view of the speaker 130 from the frame. From Fig. 26, it can be seen that the magnetic property of a side of the forward magnet 131 in the speaker 130 facing the frame is S-pole (south pole). Therefore, as shown in Fig. 20, in some embodiments of the present disclosure, a reverse magnet 140 may be disposed on an outer side of the frame of the speaker 130. That is to say, the magnetic property of a side of the reverse magnet 140 facing the frame is also S-pole.

Both of the speaker 130 and the wire 150 are disposed within the first wearing subunit 121. Then, as shown in Fig. 21, if the portions of the first wearing subunit 121 fixedly connected to two sides of the host unit 110 are made of a hard material in some embodiments of the present disclosure or the first wearing subunit 121 is a fixing unit of a hard material, optionally a groove is formed in the first wearing subunit 121 at the same position as the position where the speaker 130 is disposed in the first wearing subunit 121. Then, one reverse magnet 140 opposite in magnetic property to the forward magnet 131 in the speaker 130 is disposed in the groove, and the direction of the magnetic lines of force around the wire 150 is changed with the reverse magnet 140. The groove on the first wearing subunit 121 faces the forward magnet 131 in the speaker 130.

Factors such as the sizes of the forward magnet 131 in the speaker 130 and the reverse magnet 140 are taken into account. For example, if the size of the forward magnet 131 is greater than the size of the reverse magnet 140, in order to enable effective changing of the direction of the magnetic lines of force around the wire 150, a plurality of reverse magnets 140 are disposed within the first wearing subunit 121 in this embodiment, specifically as shown in Figs. 22 to 25.

A way in which a plurality of reverse magnets 140 are disposed within the first wearing subunit 121 is described below with reference to Figs. 22 to 25.

With reference to Fig. 22, in some embodiments of the present disclosure, a plurality of reverse magnets 140 may be sequentially disposed on the outer side of the frame of the speaker 130 along a first direction.

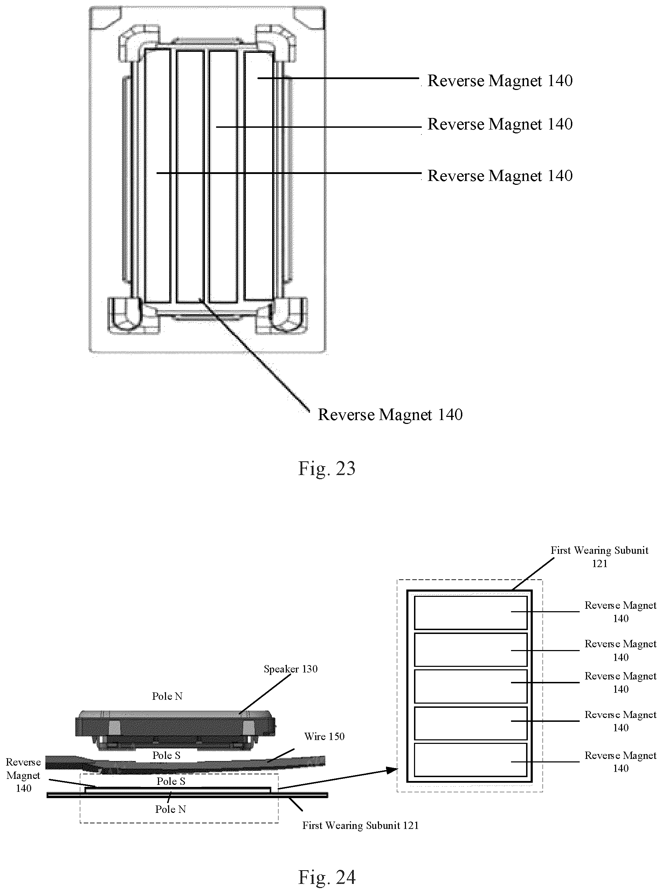

Alternatively, with reference to Fig. 23, in some embodiments of the present disclosure, a plurality of reverse magnets 140 may be sequentially disposed on the outer side of the frame of the speaker 130 along a second direction.

The first direction may be a transverse direction or a longitudinal direction, and correspondingly, the second direction may be a longitudinal direction or a transverse direction. That is to say, when the first direction is the transverse direction, the second direction is the longitudinal direction. When the first direction is the longitudinal direction, the second direction is the transverse direction. The longitudinal direction is, for example, an extending direction of the wire harness, and the transverse direction is, for example, a direction perpendicular to the extending direction of the wire harness.

In some embodiments of the present disclosure, a reverse magnet 140 may also be disposed in the groove of the first wearing subunit 121. Therefore, with reference to Fig. 24, in some embodiments of the present disclosure, a plurality of reverse magnets 140 may be sequentially disposed in the groove of the first wearing subunit 121 along the first direction.

With reference to Fig. 25, in some embodiments of the present disclosure, a plurality of reverse magnets 140 are sequentially disposed in the groove of the first wearing subunit 121 along the second direction.

The position of the groove corresponds to the position of the speaker 130 disposed in the first wearing subunit 121, and the groove faces the forward magnet 131 in the speaker 130.

In some embodiments of the present disclosure, the first direction may be the transverse direction or the longitudinal direction, and correspondingly, the second direction may be the longitudinal direction or the transverse direction. That is to say, when the first direction is the transverse direction, the second direction is the longitudinal direction. When the first direction is the longitudinal direction, the second direction is the transverse direction.

It needs to be noted that the number of the plurality of reverse magnets 140 disposed within the first wearing subunit 121 shown in Figs. 22 to 25 is merely an example, and the specific number may be flexibly adjusted according to the size of the forward magnet 131, which will not be specifically limited here.

A head-mounted device provided by some embodiments of the present disclosure includes a host and a wearing apparatus. The host is connected with the wearing apparatus. A speaker, at least one reverse magnet repelling a forward magnet in the speaker, and a wire harness for supplying power to a host unit are disposed within the wearing apparatus. Thus, by disposing at least one reverse magnet repelling the forward magnet in the speaker within the wearing apparatus, the direction of the magnetic lines of force around the power supply wire is changed by using the reverse magnet such that the magnetic field intensity around the wire harness is abated, thereby reducing and even eliminating the force pushing the wire harness. Thus, the purpose of reducing and even eliminating the vibration noise produced due to the wire harness being pushed by the force is achieved so as to effectively enhance the use experience of the user.

In some other embodiments of the present disclosure, the wire harness includes a first power wire, a first ground wire, a second power wire, and a second ground wire. The wire harness is located in a wiring structure. The wiring structure includes a wiring layer at least including a first wiring sublayer and a second wiring sublayer that are bonded together. The first wiring sublayer includes a first wiring region and a second wiring region. The second wiring sublayer includes a third wiring region and a fourth wiring region. The first wiring region is used for laying the first power wire, and the second wiring region is used for laying the first ground wire. The third wiring region is used for laying the second power wire, and the fourth wiring region is used for laying the second ground wire. The first wiring region and the second wiring region are disposed as being staggered. The third wiring region and the fourth wiring region are disposed as being staggered. The first wiring region and the third wiring region are disposed crosswise. The second wiring region and the fourth wiring region are disposed crosswise.

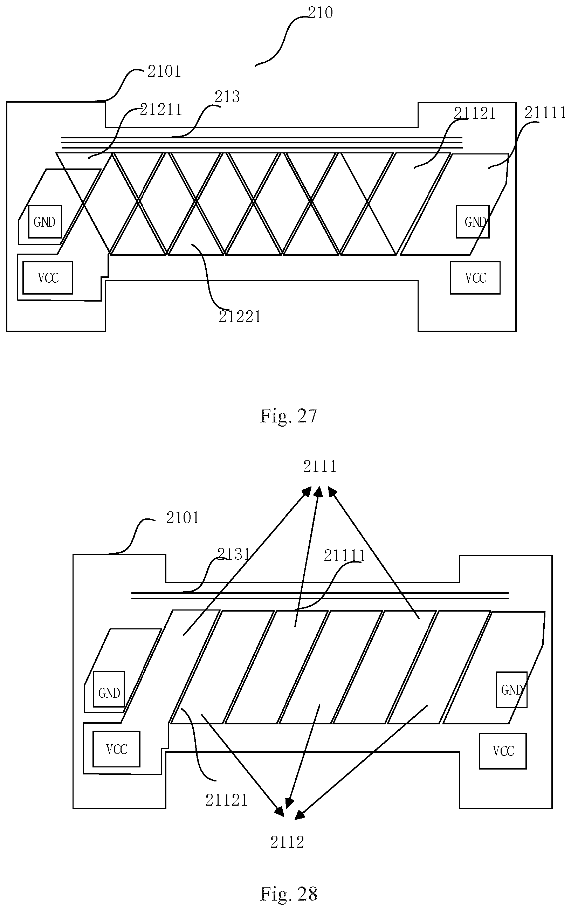

As shown in Figs. 27 to 29, some embodiments of the present disclosure further provide a wiring structure including a wiring layer 210. The wiring layer 210 at least includes a first wiring sublayer 2101 and a second wiring sublayer 2102 that are disposed as being bonded. The first wiring sublayer 2101 includes a first wiring region 2111 and a second wiring region 2112. The first wiring region 2111 is used for laying the first power wire 21111, and the second wiring region 2112 is used for laying the first ground wire 21121. The first wiring region 2111 and the second wiring region 2112 are disposed crosswise. The second wiring sublayer 2102 includes a third wiring region 2121 and a fourth wiring region 2122. The third wiring region 2121 is used for laying the second power wire 21211, and the fourth wiring region 2122 is used for laying the second ground wire 21221. The third wiring region 2121 and the fourth wiring region 2122 are disposed as being staggered. The first wiring region 2111 and the third wiring region 2121 are disposed crosswise. The second wiring region 2112 and the fourth wiring region 2122 are disposed crosswise.

In at least one embodiment of the present disclosure, the first wiring region 2111 is provided with N first power wires 21111 tilted in a first direction, and the second wiring region 2112 is provided with N first ground wires 21121 tilted in the first direction. The N first power wires 21111 are disposed in parallel as being spaced apart. The N first ground wires 21121 are laid in parallel as being spaced apart. Each first power wire 21111 and one first ground wire 21121 are alternately disposed in parallel according to a first arrangement order. N is a positive integer.

In at least one embodiment of the present disclosure, the third wiring region 2121 is provided with N second power wires 21211 tilted in a second direction, and the fourth wiring region 2122 is provided with N second ground wires 21221 tilted in the second direction, wherein the N second power wires 21211 are disposed in parallel as being spaced apart; the N second ground wires 21221 are laid in parallel as being spaced apart; each second power wire 21211 and one second ground wire 21221 are alternately disposed in parallel according to the first arrangement order; N is a positive integer; and the first direction is opposite to the second direction.

In at least one embodiment of the present disclosure, each first power wire 21111 and one second power wire 21211 are disposed crosswise in an X form; and each first ground wire 21121 and one second ground wire 21221 are disposed crosswise in an X form.

In at least one embodiment of the present disclosure, one wiring structure is explained and described as an example.

For example, the first wiring region 211 is provided with 6 first power wires 21111 and the second wiring region 2112 is provided with 6 second ground wires 21121. The third wiring region 221 is provided with 6 second power wires 21211 and the fourth wiring region 2122 is provided with 6 second ground wires 21221.

The specific structure of the wiring layer 210 is as follows.

No. 1 first power wire 21111 is tilted leftwards and laid in No. 1 first wiring subregion starting from the left side of the first wiring region 2111; No. 1 first ground wire 21121 is tilted leftwards and laid in No. 1 second wiring subregion starting from the left side of the second wiring region 2112; No. 2 first power wire 21111 is tilted leftwards and laid in No. 2 first wiring subregion starting from the left side of the first wiring region 2111; No. 2 first ground wire 21121 is tilted leftwards and laid in No. 2 second wiring subregion starting from the left side of the second wiring region 2112; No. 3 first power wire 21111 may be tilted leftwards and laid in No. 3 first wiring subregion starting from the left side of the first wiring region 2111; No. 3 first ground wire 21121 is tilted leftwards and laid in No. 3 second wiring subregion starting from the left side of the second wiring region 2112; No. 4 first power wire 21111 is tilted leftwards and laid in No. 4 first wiring subregion starting from the left side of the first wiring region 2111; No. 4 first ground wire 21121 is tilted leftwards and laid in No. 4 second wiring subregion starting from the left side of the second wiring region 2112; No. 5 first power wire 21111 is tilted leftwards and laid in No. 5 first wiring subregion starting from the left side of the first wiring region 2111; No. 5 first ground wire 21121 is tilted leftwards and laid in No. 5 second wiring subregion starting from the left side of the second wiring region 2112; No. 6 first power wire 21111 is tilted leftwards and laid in No. 6 first wiring subregion starting from the left side of the first wiring region 2111; and No. 6 first ground wire 21121 is tilted leftwards and laid in No. 6 second wiring subregion starting from the left side of the second wiring region 2112.

No. 1 second power wire 21211 is tilted rightwards and laid in No. 1 third wiring subregion starting from the left side of the third wiring region 2121; No. 1 second ground wire 21221 is tilted rightwards and laid in No. 1 fourth wiring subregion starting from the left side of the fourth wiring region 2122; No. 2 second power wire 21211 is tilted rightwards and laid in No. 2 third wiring subregion starting from the left side of the third wiring region 2121; No. 2 second ground wire 21221 is tilted rightwards and laid in No. 2 fourth wiring subregion starting from the left side of the fourth wiring region 2122; No. 3 second power wire 21211 is tilted rightwards and laid in No. 3 third wiring subregion starting from the left side of the third wiring region 2121; No. 3 second ground wire 21221 is tilted rightwards and laid in No. 3 fourth wiring subregion starting from the left side of the fourth wiring region 2122; No. 4 second power wire 21211 is tilted rightwards and laid in No. 4 third wiring subregion starting from the left side of the third wiring region 2121; No. 4 second ground wire 21221 is tilted rightwards and laid in No. 4 fourth wiring subregion starting from the left side of the fourth wiring region 2122; No. 5 second power wire 21211 is tilted rightwards and laid in No. 5 third wiring subregion starting from the left side of the third wiring region 2121; No. 5 second ground wire 21221 is tilted rightwards and laid in No. 5 fourth wiring subregion starting from the left side of the fourth wiring region 2122; No. 6 second power wire 21211 is tilted rightwards and laid in No. 6 third wiring subregion starting from the left side of the third wiring region 2121; and No. 6 second ground wire 21221 is tilted rightwards and laid in No. 6 fourth wiring subregion starting from the left side of the fourth wiring region 2122.

In at least one embodiment of the present disclosure, for the whole wiring layer 210, since the tilting directions of a certain first power wire 21111 and the second power wire 21211 at a corresponding position are opposite, the current directions of the first power wire 21111 and the second power wire 21211 at the corresponding position are opposite. Thus, the first power wire 21111 is acted upon by two Ampere forces in opposite directions, and therefore, the two Ampere forces in opposite directions counteract in part each other. Similarly, since the tilting directions of a certain first ground wire 21121 and the second ground wire 21221 at a corresponding position are opposite, the current directions of the first ground wire 21121 and the second ground wire 21221 at the corresponding position are opposite. Thus, the first ground wire 21121 is acted upon by two Ampere forces in opposite directions, and therefore, the two Ampere forces in opposite directions counteract in part each other. The amplitudes of the first power wire 21111, the second power wire 21211, the first ground wire 21121 and the second ground wire 21221 vibrating up and down and horizontally are reduced. Therefore, compared with the related art, the noise produced by vibration of the power wire due to being acted upon by a force in a magnetic field is greatly reduced, thereby significantly improving the satisfaction of the user.

As shown in Figs. 27 to 29, longitudinal sections of the first power wire 21111 and the first ground wire 21121 are parallelogrammic, and longitudinal sections of the second power wire 21211 and the second ground wire 21221 are parallelogrammic.

Since two sides of the first wiring sublayer 2101 are linear and two sides of the second wiring sublayer 2102 are also linear, the shape of the longitudinal section of the first power wire 21111, the first ground wire 21121, the second power wire 21211 or the second ground wire 21221 at an edge is adjusted accordingly.

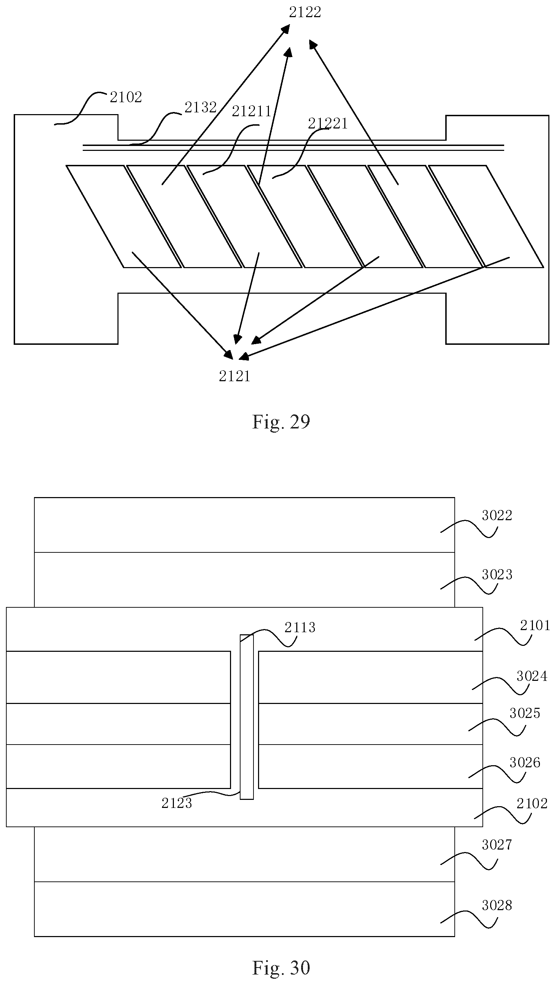

As shown in Fig. 30, in at least one embodiment of the present disclosure, the wiring structure further includes a first protective layer 3022, a second protective layer 3028, and a first insulating layer 3025. A first adhesive layer 3023 is disposed between a first surface of the first wiring sublayer 2101 and the first protective layer 3022 such that the first surface of the first wiring sublayer 2101 is bonded to the first protective layer 3022. A second adhesive layer 3024 is disposed on a second surface of the first wiring sublayer 2101 and one side of the first insulating layer 3025 such that the second surface of the first wiring sublayer 2101 is bonded to the side of the first insulating layer 3025. A third adhesive layer 3026 is disposed on a third surface of the second wiring sublayer 2102 and the other side of the first insulating layer 3025 such that the third surface of the second wiring sublayer 2102 is bonded to the other side of the first insulating layer 3025. A fourth adhesive layer 3027 is disposed between a fourth surface of the second wiring sublayer 2102 and the second protective layer 3028 such that the fourth surface of the second wiring sublayer 2102 is bonded to the second protective layer 3028.

As shown in Fig. 30, in at least one embodiment of the present disclosure, in order to communicate the first wiring sublayer 2101 with the second wiring sublayer 2102, the first wiring sublayer 2101 is provided with a first via hole 2113 and the second wiring sublayer 2102 is provided with a second via hole 2123. The first wiring sublayer 2101 may be communicated with the second wiring sublayer 2102 through the first via hole 2113 and the second via hole 2123.

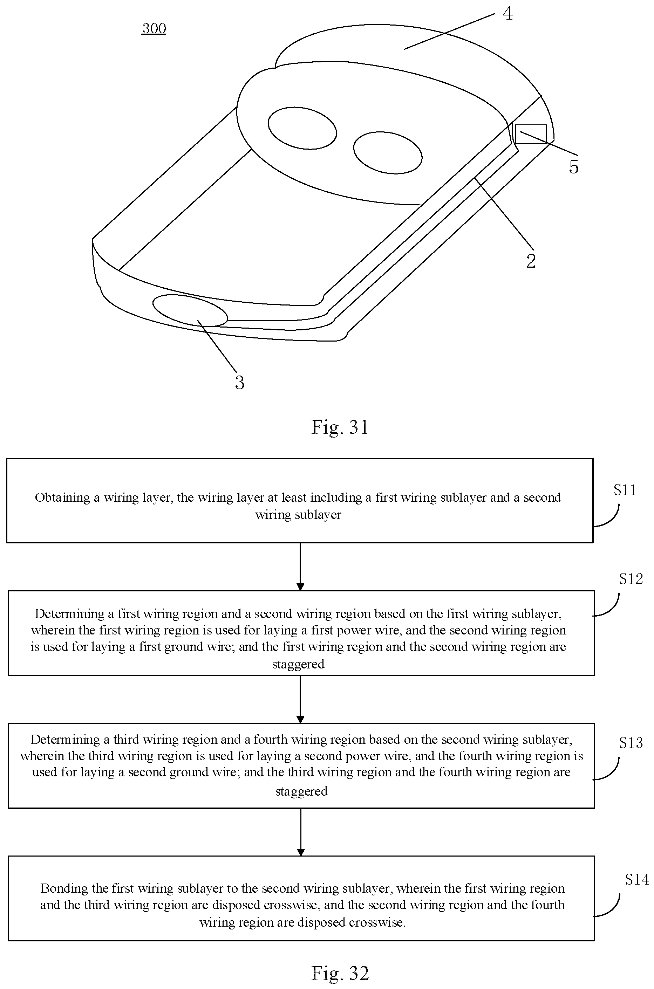

As shown in Fig. 31, in at least one embodiment of the present disclosure, the head-mounted device 300 includes a host 4 and a power supply unit 3, and also includes the wiring structure 2 as described above. One end of the wiring structure 2 is connected with the host 4. The other end of the wiring structure 2 is connected with the power supply unit 3. Speakers 5 are disposed in proximity to the wiring structure 2 on two sides of the host 4.

Another aspect of the present disclosure provides a wiring method applied to a wiring structure 2 of Figs. 27 to 30.

As shown in Fig. 32, a wiring method includes steps S11 to S14.

In step S11, a wiring layer 210 is obtained. The wiring layer at least includes a first wiring sublayer 2101 and a second wiring sublayer 2102.

For example, a plurality of (such as 2, 3, or 4) wiring layers 210 may be obtained, wherein power wires having an equal length are laid in more wiring layers 210 so that an area required by wiring can be reduced as much as possible, thus saving a wiring space.

For example, the wiring layer 210 is made of a copper foil and the like.

In step S12, a first wiring region 2111 and a second wiring region 2112 are determined based on the first wiring sublayer 2101, wherein the first wiring region 2111 is used for laying a first power wire 21111, and the second wiring region 2112 is used for laying a first ground wire 21121; and the first wiring region 2111 and the second wiring region 2112 are disposed as being staggered.

For example, determining the first wiring region 2111 and the second wiring region 2112 based on the first wiring sublayer 2101 includes: laying N first power wires 21111 tilted in a first direction in the first wiring region 2111; and laying N first ground wires 21121 tilted in the first direction in the second wiring region 2112. The N first power wires 21111 are disposed in parallel as being spaced apart. The N first ground wires 21121 are laid in parallel as being spaced apart. Each of the first power wires 21111 and one of the first ground wires 21121 are alternately disposed in parallel according to a first arrangement order. N is a positive integer.

In at least one embodiment of the present disclosure, for example, 6 first power wires 21111 need to be laid in the first wiring region 2111 and 6 first ground wires 21121 need to be laid in the second wiring region 2112, wherein the first wiring region 2111 and the second wiring region 2112 are provided with a plurality of first wiring subregions and a plurality of second wiring subregions, respectively; each first wiring subregion is used for laying one first power wire 21111; each second wiring subregion is used for laying one first ground wire 21121; and each first wiring subregion is at least adjacent and close to one second wiring subregion. Each first power wire 21111 and the first ground wire 21121 are alternately laid in parallel according to the first arrangement order. The first arrangement order may be from left to right. The first direction may be tilting rightwards. Then, No. 1 first power wire 21111 may be first tilted rightwards and laid in No. 1 first wiring subregion starting from the left side of the first wiring region 2111; No. 1 first ground wire 21121 may be tilted rightwards and laid in No. 1 second wiring subregion starting from the left side of the second wiring region 2112; No. 2 first power wire 21111 may be tilted rightwards and laid in No. 2 first wiring subregion starting from the left side of the first wiring region 2111; No. 2 first ground wire 21121 may be tilted rightwards and laid in No. 2 second wiring subregion starting from the left side of the second wiring region 2112; No. 3 first power wire 21111 may be tilted rightwards and laid in No. 3 first wiring subregion starting from the left side of the first wiring region 2111; No. 3 first ground wire 21121 may be tilted rightwards and laid in No. 3 second wiring subregion starting from the left side of the second wiring region 2112; No. 4 first power wire 21111 may be tilted rightwards and laid in No. 4 first wiring subregion starting from the left side of the first wiring region 2111; No. 4 first ground wire 21121 may be tilted rightwards and laid in No. 4 second wiring subregion starting from the left side of the second wiring region 2112; No. 5 first power wire 21111 may be tilted rightwards and laid in No. 5 first wiring subregion starting from the left side of the first wiring region 2111; No. 5 first ground wire 21121 may be tilted rightwards and laid in No. 5 second wiring subregion starting from the left side of the second wiring region 2112; No. 6 first power wire 21111 may be tilted rightwards and laid in No. 6 first wiring subregion starting from the left side of the first wiring region 2111; and No. 6 first ground wire 21121 may be tilted rightwards and laid in No. 6 second wiring subregion starting from the left side of the second wiring region 2112.

In a similar fashion, based on the above laying method, it may be realized that N first power wires 21111 are laid in N first wiring subregions disposed as being spaced apart, respectively, and N first ground wires 21121 are laid in N second wiring subregions disposed as being spaced apart, respectively. Meanwhile, it is also realized that each first power wire 21111 and one first ground wire 21121 are alternately laid.

In at least one embodiment of the present disclosure, the first wiring region 2111 and the second wiring region 2112 are determined based on the first wiring sublayer 2101; the first wiring region 2111 and the second wiring region 2112 are disposed as being staggered; N first power wires 21111 tilted in the first direction are laid in the first wiring region 2111; and N first ground wires 21121 tilted in the first direction are laid in the second wiring region 2112. Therefore, the N first power wires 21111 in the first wiring region 2111 and the N first ground wires 21121 in the second wiring region 2112 have a same arrangement order and a same tilting direction.

In the above laying method, in the first wiring region 2111 and the second wiring region 2112, the first arrangement order may also be from left to right, and the first direction may also be tilting leftwards.

For example, 6 first power wires 21111 need to be laid in the first wiring region 2111 and 6 first ground wires 21121 need to be laid in the second wiring region 2112. Then, No. 1 first power wire 21111 may be first tilted leftwards and laid in No. 1 first wiring subregion starting from the left side of the first wiring region 2111; No. 1 first ground wire 21121 may be tilted leftwards and laid in No. 1 second wiring subregion starting from the left side of the second wiring region 2112; No. 2 first power wire 21111 may be tilted leftwards and laid in No. 2 first wiring subregion starting from the left side of the first wiring region 2111; No. 2 first ground wire 21121 may be tilted leftwards and laid in No. 2 second wiring subregion starting from the left side of the second wiring region 2112; No. 3 first power wire 21111 may be tilted leftwards and laid in No. 3 first wiring subregion starting from the left side of the first wiring region 2111; No. 3 first ground wire 21121 may be tilted leftwards and laid in No. 3 second wiring subregion starting from the left side of the second wiring region 2112; No. 4 first power wire 21111 may be tilted leftwards and laid in No. 4 first wiring subregion starting from the left side of the first wiring region 2111; No. 4 first ground wire 21121 may be tilted leftwards and laid in No. 4 second wiring subregion starting from the left side of the second wiring region 2112; No. 5 first power wire 21111 may be tilted leftwards and laid in No. 5 first wiring subregion starting from the left side of the first wiring region 2111; No. 5 first ground wire 21121 may be tilted leftwards and laid in No. 5 second wiring subregion starting from the left side of the second wiring region 2112; No. 6 first power wire 21111 may be tilted leftwards and laid in No. 6 first wiring subregion starting from the left side of the first wiring region 2111; and No. 6 first ground wire 21121 may be tilted leftwards and laid in No. 6 second wiring subregion starting from the left side of the second wiring region 2112.

In at least one embodiment of the present disclosure, in the above laying method, in the first wiring region 2111 and the second wiring region 2112, the first arrangement order may also be from right to left, and the first direction may be tilting leftwards.

For example, 6 first power wires 21111 need to be laid in the first wiring region 2111 and 6 first ground wires 21121 need to be laid in the second wiring region 2112. Then, No. 1 first power wire 21111 may be first tilted leftwards and laid in No. 1 first wiring subregion starting from the right side of the first wiring region 2111; No. 1 first ground wire 21121 may be tilted leftwards and laid in No. 1 second wiring subregion starting from the right side of the second wiring region 2112; No. 2 first power wire 21111 may be tilted leftwards and laid in No. 2 first wiring subregion starting from the right side of the first wiring region 2111; No. 2 first ground wire 21121 may be tilted leftwards and laid in No. 2 second wiring subregion starting from the right side of the second wiring region 2112; No. 3 first power wire 21111 may be tilted leftwards and laid in No. 3 first wiring subregion starting from the right side of the first wiring region 2111; No. 3 first ground wire 21121 may be tilted leftwards and laid in No. 3 second wiring subregion starting from the right side of the second wiring region 2112; No. 4 first power wire 21111 may be tilted leftwards and laid in No. 4 first wiring subregion starting from the right side of the first wiring region 2111; No. 4 first ground wire 21121 may be tilted leftwards and laid in No. 4 second wiring subregion starting from the right side of the second wiring region 2112; No. 5 first power wire 21111 may be tilted leftwards and laid in No. 5 first wiring subregion starting from the right side of the first wiring region 2111; No. 5 first ground wire 21121 may be tilted leftwards and laid in No. 5 second wiring subregion starting from the right side of the second wiring region 2112; No. 6 first power wire 21111 may be tilted leftwards and laid in No. 6 first wiring subregion starting from the right side of the first wiring region 2111; and No. 6 first ground wire 21121 may be tilted leftwards and laid in No. 6 second wiring subregion starting from the right side of the second wiring region 2112.

In at least one embodiment of the present disclosure, in the above laying method, in the first wiring region 2111 and the second wiring region 2112, the first arrangement order may also be from right to left, and the first direction may be tilting rightwards.

For example, 6 first power wires 21111 need to be laid in the first wiring region 2111 and 6 first ground wires 21121 need to be laid in the second wiring region 2112. Then, No. 1 first power wire 21111 may be first tilted rightwards and laid in No. 1 first wiring subregion starting from the right side of the first wiring region 2111; No. 1 first ground wire 21121 may be tilted rightwards and laid in No. 1 second wiring subregion starting from the right side of the second wiring region 2112; No. 2 first power wire 21111 may be tilted rightwards and laid in No. 2 first wiring subregion starting from the right side of the first wiring region 2111; No. 2 first ground wire 21121 may be tilted rightwards and laid in No. 2 second wiring subregion starting from the right side of the second wiring region 2112; No. 3 first power wire 21111 may be tilted rightwards and laid in No. 3 first wiring subregion starting from the right side of the first wiring region 2111; No. 3 first ground wire 21121 may be tilted rightwards and laid in No. 3 second wiring subregion starting from the right side of the second wiring region 2112; No. 4 first power wire 21111 may be tilted rightwards and laid in No. 4 first wiring subregion starting from the right side of the first wiring region 2111; No. 4 first ground wire 21121 may be tilted rightwards and laid in No. 4 second wiring subregion starting from the right side of the second wiring region 2112; No. 5 first power wire 21111 may be tilted rightwards and laid in No. 5 first wiring subregion starting from the right side of the first wiring region 2111; No. 5 first ground wire 21121 may be tilted rightwards and laid in No. 5 second wiring subregion starting from the right side of the second wiring region 2112; No. 6 first power wire 21111 may be tilted rightwards and laid in No. 6 first wiring subregion starting from the right side of the first wiring region 2111; and No. 6 first ground wire 21121 may be tilted rightwards and laid in No. 6 second wiring subregion starting from the right side of the second wiring region 2112.

In step S13, a third wiring region 2121 and a fourth wiring region 2122 are determined based on the second wiring sublayer 2102, wherein the third wiring region 2121 is used for laying a second power wire 21211, and the fourth wiring region 2122 is used for laying a second ground wire 21221; and the third wiring region 2121 and the fourth wiring region 2122 are disposed as being staggered.

For example, determining the third wiring region 2121 and the fourth wiring region 2122 based on the second wiring sublayer 2102 includes: laying N second power wires 21211 tilted in a second direction in the third wiring region 2121; and laying N second ground wires 21221 tilted in the second direction in the fourth wiring region 2122, wherein the N second power wires 21211 are disposed in parallel as being spaced apart; the N second ground wires 21221 are laid in parallel as being spaced apart; each of the second power wires 21211 and one of the second ground wires 21221 are alternately disposed in parallel according to the first arrangement order; N is a positive integer; and the first direction is opposite to the second direction.

In at least one embodiment of the present disclosure, corresponding to the above step, for example, 6 second power wires 21211 need to be laid in the third wiring region 2121 and 6 second ground wires 21221 need to be laid in the fourth wiring region 2122, wherein the third wiring region 2121 and the fourth wiring region 2122 are provided with a plurality of third wiring subregions and a plurality of fourth wiring subregions, respectively; each third wiring subregion is used for laying one second power wire 21211; each fourth wiring subregion is used for laying one second ground wire 21221; and each third wiring subregion is at least adjacent and close to one fourth wiring subregion. Each second power wire 21211 and the second ground wire 21221 are alternately laid in parallel according to the first arrangement order. The first arrangement order may be from left to right. The second direction may be tilting leftwards. Then, No. 1 second power wire 21211 may be first tilted leftwards and laid in No. 1 third wiring subregion starting from the left side of the third wiring region 2121; No. 1 second ground wire 21221 may be tilted leftwards and laid in No. 1 fourth wiring subregion starting from the left side of the fourth wiring region 2122; No. 2 second power wire 21211 may be tilted leftwards and laid in No. 2 third wiring subregion starting from the left side of the third wiring region 2121; No. 2 second ground wire 21221 may be tilted leftwards and laid in No. 2 fourth wiring subregion starting from the left side of the fourth wiring region 2122; No. 3 second power wire 21211 may be tilted leftwards and laid in No. 3 third wiring subregion starting from the left side of the third wiring region 2121; No. 3 second ground wire 21221 may be tilted leftwards and laid in No. 3 fourth wiring subregion starting from the left side of the fourth wiring region 2122; No. 4 second power wire 21211 may be tilted leftwards and laid in No. 4 third wiring subregion starting from the left side of the third wiring region 2121; No. 4 second ground wire 21221 may be tilted leftwards and laid in No. 4 fourth wiring subregion starting from the left side of the fourth wiring region 2122; No. 5 second power wire 21211 may be tilted leftwards and laid in No. 5 third wiring subregion starting from the left side of the third wiring region 2121; No. 5 second ground wire 21221 may be tilted leftwards and laid in No. 5 fourth wiring subregion starting from the left side of the fourth wiring region 2122; No. 6 second power wire 21211 may be tilted leftwards and laid in No. 6 third wiring subregion starting from the left side of the third wiring region 2121; and No. 6 second ground wire 21221 may be tilted leftwards and laid in No. 6 fourth wiring subregion starting from the left side of the fourth wiring region 2122. In a similar fashion, based on the above laying method, it may be realized that N second power wires 21211 are laid in N third wiring subregions disposed as being spaced apart, respectively, and N second ground wires 21221 are laid in N fourth wiring subregions disposed as being spaced apart, respectively. Meanwhile, it is also realized that each second power wire 21211 and one second ground wire 21221 are alternately laid.

In at least one embodiment of the present disclosure, in the above laying method, when the first direction is tilting leftwards and the first arrangement order is from left to right in the first wiring sublayer 2101, and the first arrangement order is from left to right and the second direction is tilting rightwards in the second wiring sublayer 2102, No. 1 second power wire 21211 may be first tilted rightwards and laid in No. 1 third wiring subregion starting from the left side of the third wiring region 2121; No. 1 second ground wire 21221 may be tilted rightwards and laid in No. 1 fourth wiring subregion starting from the left side of the fourth wiring region 2122; No. 2 second power wire 21211 may be tilted rightwards and laid in No. 2 third wiring subregion starting from the left side of the third wiring region 2121; No. 2 second ground wire 21221 may be tilted rightwards and laid in No. 2 fourth wiring subregion starting from the left side of the fourth wiring region 2122; No. 3 second power wire 21211 may be tilted rightwards and laid in No. 3 third wiring subregion starting from the left side of the third wiring region 2121; No. 3 second ground wire 21221 may be tilted rightwards and laid in No. 3 fourth wiring subregion starting from the left side of the fourth wiring region 2122; No. 4 second power wire 21211 may be tilted rightwards and laid in No. 4 third wiring subregion starting from the left side of the third wiring region 2121; No. 4 second ground wire 21221 may be tilted rightwards and laid in No. 4 fourth wiring subregion starting from the left side of the fourth wiring region 2122; No. 5 second power wire 21211 may be tilted rightwards and laid in No. 5 third wiring subregion starting from the left side of the third wiring region 2121; No. 5 second ground wire 21221 may be tilted rightwards and laid in No. 5 fourth wiring subregion starting from the left side of the fourth wiring region 2122; No. 6 second power wire 21211 may be tilted rightwards and laid in No. 6 third wiring subregion starting from the left side of the third wiring region 2121; and No. 6 second ground wire 21221 may be tilted rightwards and laid in No. 6 fourth wiring subregion starting from the left side of the fourth wiring region 2122.

In at least one embodiment of the present disclosure, in the above laying method, in the first wiring sublayer 2101, the first direction is tilting leftwards and the first arrangement order is from right to left. In the second wiring sublayer 2102, the first arrangement order is from right to left and the second direction is tilting rightwards.

For example, 6 second power wires 21211 need to be laid in the third wiring region 2121 and 6 second ground wires 21221 need to be laid in the fourth wiring region 2122. Then, No. 1 second power wire 21211 may be first tilted rightwards and laid in No. 1 third wiring subregion starting from the right side of the third wiring region 2121; No. 1 second ground wire 21221 may be tilted rightwards and laid in No. 1 fourth wiring subregion starting from the right side of the fourth wiring region 2122; No. 2 second power wire 21211 may be tilted rightwards and laid in No. 2 third wiring subregion starting from the right side of the third wiring region 2121; No. 2 second ground wire 21221 may be tilted rightwards and laid in No. 2 fourth wiring subregion starting from the right side of the fourth wiring region 2122; No. 3 second power wire 21211 may be tilted rightwards and laid in No. 3 third wiring subregion starting from the right side of the third wiring region 2121; No. 3 second ground wire 21221 may be tilted rightwards and laid in No. 3 fourth wiring subregion starting from the right side of the fourth wiring region 2122; No. 4 second power wire 21211 may be tilted rightwards and laid in No. 4 third wiring subregion starting from the right side of the third wiring region 2121; No. 4 second ground wire 21221 may be tilted rightwards and laid in No. 4 fourth wiring subregion starting from the right side of the fourth wiring region 2122; No. 5 second power wire 21211 may be tilted rightwards and laid in No. 5 third wiring subregion starting from the right side of the third wiring region 2121; No. 5 second ground wire 21221 may be tilted rightwards and laid in No. 5 fourth wiring subregion starting from the right side of the fourth wiring region 2122; No. 6 second power wire 21211 may be tilted rightwards and laid in No. 6 third wiring subregion starting from the right side of the third wiring region 2121; and No. 6 second ground wire 21221 may be tilted rightwards and laid in No. 6 fourth wiring subregion starting from the right side of the fourth wiring region 2122.

In at least one embodiment of the present disclosure, in the above laying method, in the first wiring sublayer 2101, the first direction is tilting rightwards and the first arrangement order is from right to left. In the second wiring sublayer 2102, the first arrangement order is from right to left and the second direction is tilting leftwards.

For example, 6 second power wires 21211 need to be laid in the third wiring region 2121 and 6 second ground wires 21221 need to be laid in the fourth wiring region 2122. Then, No. 1 second power wire 21211 may be first tilted leftwards and laid in No. 1 third wiring subregion starting from the right side of the third wiring region 2121; No. 1 second ground wire 21221 may be tilted leftwards and laid in No. 1 fourth wiring subregion starting from the right side of the fourth wiring region 2122; No. 2 second power wire 21211 may be tilted leftwards and laid in No. 2 third wiring subregion starting from the right side of the third wiring region 2121; No. 2 second ground wire 21221 may be tilted leftwards and laid in No. 2 fourth wiring subregion starting from the right side of the fourth wiring region 2122; No. 3 second power wire 21211 may be tilted leftwards and laid in No. 3 third wiring subregion starting from the right side of the third wiring region 2121; No. 3 second ground wire 21221 may be tilted leftwards and laid in No. 3 fourth wiring subregion starting from the right side of the fourth wiring region 2122; No. 4 second power wire 21211 may be tilted leftwards and laid in No. 4 third wiring subregion starting from the right side of the third wiring region 2121; No. 4 second ground wire 21221 may be tilted leftwards and laid in No. 4 fourth wiring subregion starting from the right side of the fourth wiring region 2122; No. 5 second power wire 21211 may be tilted leftwards and laid in No. 5 third wiring subregion starting from the right side of the third wiring region 2121; No. 5 second ground wire 21221 may be tilted leftwards and laid in No. 5 fourth wiring subregion starting from the right side of the fourth wiring region 2122; No. 6 second power wire 21211 may be tilted leftwards and laid in No. 6 third wiring subregion starting from the right side of the third wiring region 2121; and No. 6 second ground wire 21221 may be tilted leftwards and laid in No. 6 fourth wiring subregion starting from the right side of the fourth wiring region 2122.

In at least one embodiment of the present disclosure, since each first power wire 21111 and one first ground wire 21121 are alternately disposed in parallel and each second power wire 21211 and one second ground wire 21221 are alternately disposed in parallel, it is realized that each first power wire 21111 is adjacent to one first ground wire 21121 at the first wiring sublayer 2101. Taking one first power wire 21111 as an example, after being energized, the first power wire 21111 and the adjacent first ground wire 21121 are the same in current magnitude and opposite in current direction, and therefore, the first power wire 21111 is acted upon by two Ampere forces in opposite directions. Thus, the two Ampere forces in opposite directions counteract in part each other. Accordingly, the amplitude of the horizontal vibration of the first power wire 21111 and the first ground wire 21121 at the first wiring sublayer 2101 is reduced. As a result, the noise produced by the vibration of the first power wire 21111 and the first ground wire 21121 in a horizontal direction is reduced.

Similarly, it is realized that each second power wire 21211 is adjacent to one second ground wire 21221 at the second wiring sublayer 2102. Taking one second power wire 21211 as an example, after being energized, the second power wire 21211 and the adjacent second ground wire 21221 are the same in current magnitude and opposite in current direction, and therefore, the second power wire 21211 is acted upon by two Ampere forces in opposite directions. Thus, the two Ampere forces in opposite directions counteract in part each other. Accordingly, the amplitude of the horizontal vibration of the second power wire 21211 and the second ground wire 21221 at the second wiring sublayer 2102 is reduced. As a result, the noise produced by the vibration of the second power wire 21211 and the second ground wire 21221 in the horizontal direction is reduced.

In step S14, the first wiring sublayer 2101 is bonded to the second wiring sublayer 2102, wherein the first wiring region 2111 and the third wiring region 2121 are disposed crosswise, and the second wiring region 2112 and the fourth wiring region 2122 are disposed crosswise.

Bonding the first wiring sublayer 2101 to the second wiring sublayer 2102 includes: disposing each of the first power wires 21111 and one of the second power wires 21211 crosswise in an X form; and disposing each of the first ground wires 21121 and one of the second ground wires 21221 crosswise in the X form.

In at least one embodiment of the present disclosure, by bonding the first wiring sublayer 2101 to the second wiring sublayer 2102, the first wiring sublayer 2101 and the second wiring sublayer 2102 may be fixed such that each first power wire 21111 corresponds to the second power wire 21211 at the corresponding position crosswise.

In at least one embodiment of the present disclosure, since each first power wire 21111 and one second power wire 21211 at the corresponding position are disposed crosswise, taking the first power wire 21111 as an example, after being energized, the first power wire 21111 and the second power wire 21211 at the corresponding position are the same in current magnitude. However, since the tilting directions of the first power wire 21111 and the second power wire 21211 at the corresponding position, the current directions of the first power wire 21111 and the second power wire 21211 at the corresponding position are opposite. Therefore, the first power wire 21111 is acted upon by two Ampere forces in opposite directions. Thus, the two Ampere forces in opposite directions counteract in part each other. Accordingly, the amplitude of the up-and-down vibration of the first power wire 21111 is reduced. As a result, the noise produced by the vibration of the first power wire 21111 and the second power wire 21211 in a vertical direction is reduced.

Similarly, since each first ground wire 21121 and one second ground wire 21221 at the corresponding position are disposed crosswise, taking one first ground wire 21121 as an example, after being energized, the first ground wire 21121 and the second ground wire 21221 at the corresponding position are the same in current magnitude. However, since the tilting directions of the first ground wire 21121 and the second ground wire 21221 at the corresponding position, the current directions of the first ground wire 21121 and the second ground wire 21221 at the corresponding position are opposite. Therefore, the first ground wire 21121 is acted upon by two Ampere forces in opposite directions. Thus, the two Ampere forces in opposite directions counteract in part each other. Accordingly, the amplitude of the up-and-down vibration of the first ground wire 21121 is reduced. As a result, the noise produced by the vibration of the first ground wire 21121 and the second ground wire 21221 in the vertical direction is reduced.

In at least one embodiment of the present disclosure, for the first wiring sublayer 2101, the amplitude of the horizontal vibration of the first power wire 21111 and the first ground wire 21121 is reduced. For the second wiring sublayer 2102, the amplitude of the horizontal vibration of the second power wire 21211 and the second ground wire 21221 is reduced. For the whole wiring layer 210, the amplitudes of the up-and-down vibration and the horizontal vibration of the first power wire 21111, the second power wire 21211, the first ground wire 21121, and the second ground wire 21221 are reduced. Therefore, compared with the related art, the noise produced by vibration of the power wire due to being acted upon by a force in a magnetic field is greatly reduced, thereby significantly improving the satisfaction of the user.

Bonding the first wiring sublayer 2101 to the second wiring sublayer 2102 further includes: bonding a first surface of the first wiring sublayer 2101 to a first protective layer 3022 through a first adhesive layer 3023; bonding a second surface of the first wiring sublayer 2101 to one side of a first insulating layer 3025 through a second adhesive layer 3024; bonding a third surface of the second wiring sublayer 2102 to the other side of the first insulating layer 3025 through a third adhesive layer 3026; and bonding a fourth surface of the second wiring sublayer 2102 to a second protective layer 3028 through a fourth adhesive layer 3027.

In the embodiments of the present disclosure, since the materials of the first adhesive layer 3023, the second adhesive layer 3024, the third adhesive layer 3026, the fourth adhesive layer 3027, the first insulating layer 3025, the first protective layer 3022, and the second protective layer 3028 are not within the protection scope of the embodiments of the present disclosure, the materials of the first adhesive layer 3023, the second adhesive layer 3024, the third adhesive layer 3026, the fourth adhesive layer 3027, the first insulating layer 3025, the first protective layer 3022, and the second protective layer 3028 are not specifically defined.

In at least one embodiment of the present disclosure, the first insulating layer 3025 is configured to form insulation protection between the first wiring sublayer 2101 and the second wiring sublayer 2102, and the first protective layer 3022 and the second protective layer 3028 are configured to provide antioxidation and anti-damage protection for the first wiring sublayer 2101 and the second wiring sublayer 2102, respectively.

In at least one embodiment of the present disclosure, the first wiring sublayer 2101 is provided with a first via hole 2113 and the second wiring sublayer 2102 is provided with a second via hole 2123. The first wiring sublayer 2101 is communicated with the second wiring sublayer 2102 through the first via hole 2113 and the second via hole 2123.

In at least one embodiment of the present disclosure, when the wiring layer 210 includes, for example, a third wiring sublayer in addition to the first wiring sublayer 2101 and the second wiring sublayer 2102, one surface of the third wiring sublayer is bonded to a second insulating layer through a fifth adhesive layer, and the other surface of the third wiring sublayer is bonded to the second protective layer 3028 through a sixth adhesive layer. The structure of the third wiring sublayer is completely identical to the structure of the first wiring sublayer 2101. In a similar fashion, any number of wiring layers 210 may be obtained. For example, the wiring layer 210 may include the first wiring sublayer 2101, the second wiring sublayer 2102, the third wiring sublayer, ..., and an M-th wiring sublayer, wherein M≥2, and M is an integer.

When an L-th wiring sublayer is present, if L is an even number, a wiring manner of the L-th wiring sublayer is completely identical to that of the second wiring sublayer 2102. If L is an odd number, the wiring manner of the L-th wiring sublayer is completely identical to that of the first wiring sublayer 2101, wherein L is a positive integer, and L≤M. In at least one embodiment of the present disclosure, adaptation to various different wiring spaces can be achieved, and the application range of the wiring structure 2 can be widened.

In at least one embodiment of the present disclosure, for example, the power wire and the ground wire may be laid based on FPC, FR4 hard board, or a combination of FPC and FR4 hard board. For example, the power wire and the ground wire are laid on the FPC by welding or by means of a connector, etc.

After the laying of the first wiring sublayer 2101 and the second wiring sublayer 2102 is completed based on the above laying method, the first wiring sublayer 2101 is bonded to the second wiring sublayer 2102. Then, the first surface of the first wiring sublayer 2101 is bonded to the first protective layer 3022 through the first adhesive layer 3023. The second surface of the first wiring sublayer 2101 is bonded to one side of the first insulating layer 3025 through the second adhesive layer 3024. The third surface of the second wiring sublayer 2102 is bonded to the other side of the first insulating layer 3025 through the third adhesive layer 3026. The fourth surface of the second wiring sublayer 2102 is bonded to the second protective layer 3028 through the fourth adhesive layer 3027. Thus, an FPC wiring structure is obtained for example.

In addition, in order to realize that the obtained FPC wiring structure can be normally energized, the FPC wiring structure is provided with at least one VCC port and at least one GND port. The first power wire 21111 and the second power wire 21211 are separately connected to the VCC port, and the first ground wire 21121 and the second ground wire 21221 are separately connected to the GND port.

Further, in order to realize that the FPC wiring structure can transmit an electrical signal, the FPC wiring structure is further provided with an electrical signal port and a signal wire 213, wherein a first signal wire 2131 is laid in other regions away from the first wiring region 2111 and the second wiring region 2112 in the first wiring sublayer 2101; and a second signal wire 2132 is laid in other regions away from the third wiring region 2121 and the fourth wiring region 2122 in the second wiring sublayer 2102.

In at least one embodiment of the present disclosure, since the current in the first signal wire 2131 and the second signal wire 2132 is much smaller than the current in the first power wire 21111, the second power wire 21211, the first ground wire 21121 or the second ground wire 21221 after the FPC wiring structure is energized, the interference of the current in the first signal wire 2131 and the second signal wire 2132 with the first power wire 21111, the second power wire 21211, the first ground wire 21121 or the second ground wire 21221 may be neglected. For example, when the current in the first power wire 21111 is 5A, the current in the first signal wire 2131 might be a small current such as 1 mA, and therefore, the current in the first power wire 21111 is much greater than the current in the first signal wire 2131.

In the above embodiments, 1) since each first power wire and one first ground wire are alternately disposed in parallel and each second power wire and one second ground wire are alternately disposed in parallel, it is realized that each first power wire is adjacent to one first ground wire at the first wiring sublayer. Taking one first power wire as an example, after being energized, the first power wire and the adjacent first ground wire are the same in current magnitude and opposite in current direction, and therefore, the first power wire is acted upon by two Ampere forces in opposite directions. The two Ampere forces in opposite directions counteract in part each other. Thus, the amplitude of the horizontal vibration of the first power wire and the first ground wire at the first wiring sublayer is reduced. As a result, the noise produced by the vibration of the first power wire and the first ground wire in a horizontal direction is reduced.

2) It is realized that each second power wire is adjacent to one second ground wire at the second wiring sublayer. Taking one second power wire as an example, after being energized, the second power wire and the adjacent second ground wire are the same in current magnitude and opposite in current direction, and therefore, the second power wire is acted upon by two Ampere forces in opposite directions. Thus, the two Ampere forces in opposite directions counteract in part each other. Accordingly, the amplitude of the horizontal vibration of the second power wire and the second ground wire at the second wiring sublayer is reduced. As a result, the noise produced by the vibration of the second power wire and the second ground wire in the horizontal direction is reduced.

3) Since each first power wire and one second power wire at the corresponding position are disposed crosswise, taking one first power wire as an example, after being energized, the first power wire and the second power wire at the corresponding position are the same in current magnitude and opposite in current direction. Therefore, the first power wire is acted upon by two Ampere forces in opposite directions. Thus, the two Ampere forces in opposite directions counteract in part each other. Accordingly, the amplitude of the up-and-down vibration of the first power wire is reduced. As a result, the noise produced by the vibration of the first power wire and the second power wire in the vertical direction is reduced.

4) Since each first ground wire and one second ground wire at the corresponding position are disposed crosswise, taking one first ground wire as an example, after being energized, the first ground wire and the second ground wire at the corresponding position are the same in current magnitude and opposite in current direction. Therefore, the first ground wire is acted upon by two Ampere forces in opposite directions. Thus, the two Ampere forces in opposite directions counteract in part each other. Accordingly, the amplitude of the up-and-down vibration of the first ground wire is reduced. As a result, the noise produced by the vibration of the first ground wire and the second ground wire in the vertical direction is reduced.

5) For the first wiring sublayer, the amplitude of the horizontal vibration of the first power wire and the first ground wire is reduced. For the second wiring sublayer, the amplitude of the horizontal vibration of the second power wire and the second ground wire is reduced. For the whole wiring layer, the amplitudes of the up-and-down vibration and the horizontal vibration of the first power wire, the second ground wire, the first ground wire, and the second ground wire are reduced. Therefore, compared with the related art, the noise produced by vibration of the power wire due to being acted upon by a force in a magnetic field is greatly reduced, thereby significantly improving the satisfaction of the user.

The structures, working principles, and operations of other components (such as a host 10 and a battery part 30) of the head-mounted device 100 of the embodiments of the present disclosure are known to those of ordinary skill in the art, which are no longer described in detail here.

In the descriptions of the present disclosure, a description with reference to terms "embodiment", "example", and the like means that a specific feature, structure, material or characteristic described in combination with the embodiment or the example is included in at least one embodiment or example of the present disclosure. In this specification, the schematic descriptions of the above terms do not necessarily refer to the same embodiment or example. In addition, the specific features, structures, materials, or characteristics described may be combined in any suitable manner in any one or more embodiments or examples.

It should be noted that, in the description of the present disclosure, the terms such as "central", "longitudinal", "transverse", "length", "width", "thickness", "upper", "lower", "front", "back", "left", "right", "vertical", "horizontal", "top", "bottom", "inner", "outer", "clockwise", "anticlockwise", "axial", "radial" and "circumferential" are used to indicate orientations shown in the drawings. It should be noted that these terms are merely intended to facilitate a simple description of the present disclosure, rather than to indicate or imply that the mentioned apparatus or elements must have the specific orientation or be constructed and operated in the specific orientation. Therefore, these terms may not be construed as a limitation to the present disclosure.

Moreover, the terms such as "first" and "second" are used only for the purpose of description and should not be construed as indicating or implying a relative importance, or implicitly indicating a quantity of indicated technical features. Therefore, a feature limited by "first" or "second" may explicitly or implicitly include at least one such feature. In the description of the present disclosure, "a plurality of" means at least two, such as two or three, unless otherwise clearly and specifically limited.

In the present disclosure, unless otherwise clearly specified, the terms such as "mounting", "interconnection", "connection" and "fixation" are intended to be understood in a broad sense. For example, the "connection" may be a fixed connection, removable connection or integral connection; may be a mechanical connection or electrical connection; may be a direct connection or indirect connection using a medium; and may be a communication or interaction between two elements. Those of ordinary skill in the art may understand the specific meanings of the above terms in the present disclosure based on the specific situation.

In the present disclosure, unless otherwise explicitly specified, when it is described that a first feature is "above" or "below" a second feature, it indicates that the first and second features are in direct contact or the first and second features are in indirect contact through an intermediate feature. In addition, when it is described that the first feature is "over", "above" and "on" the second feature, it indicates that the first feature is directly or obliquely above the second feature, or simply indicates that an altitude of the first feature is higher than that of the second feature. When it is described that a first feature is "under", "below" or "beneath" a second feature, it indicates that the first feature is directly or obliquely under the second feature or simply indicates that the first feature is lower than the second feature.

Although the embodiments of the present disclosure have been illustrated, it should be understood that those of ordinary skill in the art may still make various changes, modifications, replacements, and variations to the foregoing embodiments without departing from the principle and spirit of the present disclosure, and the scope of the present disclosure is limited by the claims and legal equivalents thereof.

## Claims

1. A head-mounted device, comprising:
a host;
a wearing apparatus connected to the host, wherein an acoustical device and a wire harness are disposed in the wearing apparatus, and the wire harness is configured to supply power to the host,
wherein the wearing apparatus further comprises a spacer layer which is between the acoustical device and the wire harness, and the spacer layer is a high magnetic permeability material layer.

2. The head-mounted device according to claim 1, wherein the acoustical device has a sound outgoing side and a sound opposing side that are opposite to each other;
the sound outgoing side of the acoustical device is disposed facing a head mount space; and the wire harness is on the sound opposing side of the acoustical device.

3. The head-mounted device according to claim 2, wherein a magnet is disposed in the acoustical device; and a vertical projection of the spacer layer on the sound opposing side of the acoustical device at least covers a vertical projection of the magnet on the sound opposing side of the acoustical device.

4. The head-mounted device according to any one of claims 1 to 3, wherein the spacer layer is fixedly connected to the acoustical device.

5. The head-mounted device according to claim 4, wherein the spacer layer is fixed to the acoustical device through an adhesive.

6. The head-mounted device according to any one of claims 1 to 5, wherein one or at least two spacer layers are present; and in a case where at least two spacer layers are present, two adjacent ones of the spacer layers are spaced apart or disposed next to each other.

7. The head-mounted device according to claim 6, wherein in the case where at least two spacer layers are present, the spacer layers are a first spacer layer and a second spacer layer, respectively; a magnetic permeability of the first spacer layer is higher than a magnetic permeability of the second spacer layer, and a magnetic saturation of the second spacer layer is higher than a magnetic saturation of the first spacer layer.

8. The head-mounted device according to claim 6, wherein in the case where at least two spacer layers are present, two adjacent ones of the spacer layers are connected through an adhesive; and the wire harness is connected to the spacer layer through an adhesive.

9. The head-mounted device according to any one of claims 1 to 8, wherein the spacer layer comprises at least one of a cold-rolled carbon steel sheet, a silicon steel plate, a permalloy plate, and a nanocrystalline plate.

10. The head-mounted device according to any one of claims 1 to 9, wherein the wire harness comprises at least one first wire and at least one second wire; the first wire is disposed adjacent to the at least one second wire; and/or the second wire is disposed adjacent to the at least one first wire.

11. The head-mounted device according to claim 10, wherein one of the first wire and the second wire is a positive connecting wire and the other one is a negative connecting wire.

12. The head-mounted device according to claim 10 or 11, wherein at least part of first wires and at least part of second wires are arranged alternately in a width direction of the wearing apparatus.

13. The head-mounted device according to claim 12, wherein all first wires and all second wires are arranged alternately in the width direction of the wearing apparatus.

14. The head-mounted device according to claim 12, wherein the wire harness comprises a plurality of wire harness layers that arranged in a thickness direction of the wearing apparatus; and at least part of first wires and at least part of second wires in each of the plurality of wire harness layers are arranged alternately in the width direction of the wearing apparatus.

15. The head-mounted device according to claim 10 or 11, wherein the wire harness comprises a first wire group and a second wire group arranged in the thickness direction of the wearing apparatus;
the first wire group comprises one first wire; or, the first wire group comprises a plurality of first wires that are arranged in juxtaposition in the width direction of the wearing apparatus; and
the second wire group comprises one second wire; or, the second wire group comprises a plurality of second wires that are arranged in juxtaposition in the width direction of the wearing apparatus.

16. The head-mounted device according to claim 10 or 11, wherein the first wire and at least one of the second wires are spirally arranged crosswise, and/or the second wire and at least one of the first wires are spirally arranged crosswise.

17. The head-mounted device according to claim 16, wherein a count of the first wires is equal to a count of the second wires, and the first wires and the second wires are spirally arranged crosswise each to each.

18. The head-mounted device according to any one of claims 10 to 17, wherein the first wire and/or the second wire is/are covered with a protective layer; and the protective layer comprises a rubber layer, a plastic layer, or a carbon fiber layer.

19. The head-mounted device according to any one of claims 1 to 18, wherein the wearing apparatus further comprises at least one reverse magnet repelling a forward magnet in the acoustical device.

20. The head-mounted device according to claim 19, wherein a way in which the reverse magnet is disposed comprises:
the reverse magnet being disposed on an outer side of a frame of the acoustical device; or
the reverse magnet being disposed in a groove, which is facing the forward magnet, of the wearing apparatus.

21. The head-mounted device according to claim 20, wherein in a case where the reverse magnet is disposed on the outer side of the frame of the acoustical device, the way in which the reverse magnet is disposed comprises:
in a case where a plurality of reverse magnets are present, the plurality of reverse magnets being sequentially disposed on the outer side of the frame of a speaker along a first direction; or, the plurality of reverse magnets being sequentially disposed on the outer side of the frame of the speaker along a second direction different from the first direction.

22. The head-mounted device according to claim 20, wherein in a case where the reverse magnet is disposed in the groove, which is facing the forward magnet, of the wearing apparatus, the way in which the reverse magnet is disposed comprises:
a plurality of reverse magnets being sequentially disposed in the groove of the wearing apparatus along a first direction; or
a plurality of reverse magnets being sequentially disposed in the groove of the wearing apparatus along a second direction different from the first direction.

23. The head-mounted device according to any one of claims 19 to 22, wherein the wearing apparatus comprises a first wearing subunit and a second wearing subunit;
one end of the first wearing subunit is fixedly connected to one end of the host, and the other end of the first wearing subunit is fixedly connected to the other end of the host, and the acoustical device, the at least one reverse magnet, and the wire harness are located within the first wearing subunit; and
one end of the second wearing subunit is fixedly connected to a top end of the host, and the other end of the second wearing subunit is fixedly connected to a middle position of the first wearing subunit.

24. The head-mounted device according to claim 23, wherein the first wearing subunit is an annular wearing subunit, and the second wearing subunit is a top wearing subunit.

25. The head-mounted device according to claim 23 or 24, wherein in a case where the first wearing subunit and the second wearing subunit are made of a hard material, the first wearing subunit and the second wearing subunit are of a cambered structure.

26. The head-mounted device according to any one of claims 1 to 9, wherein the wire harness comprises a first power wire, a first ground wire, a second power wire, a second ground wire;
the wire harness is located in a wiring structure; the wiring structure comprises a wiring layer at least comprising a first wiring sublayer and a second wiring sublayer that are bonded together; the first wiring sublayer comprises a first wiring region and a second wiring region; the second wiring sublayer comprises a third wiring region and a fourth wiring region; the first wiring region is used for laying the first power wire, and the second wiring region is used for laying the first ground wire; the third wiring region is used for laying the second power wire, and the fourth wiring region is used for laying the second ground wire;
the first wiring region and the second wiring region are staggered; the third wiring region and the fourth wiring region are staggered; the first wiring region and the third wiring region are disposed crosswise; and the second wiring region and the fourth wiring region are disposed crosswise.

27. The head-mounted device according to claim 26, wherein the first wiring region is provided with N first power wires tilted in a first direction, and the second wiring region is provided with N first ground wires tilted in the first direction, wherein the N first power wires are spaced in parallel; the N first ground wires are spaced in parallel; the N first power wires and the N first ground wires are one by one alternately disposed in parallel according to a first arrangement order; and wherein N is a positive integer.

28. The head-mounted device according to claim 27, wherein the third wiring region is provided with N second power wires tilted in a second direction, and the fourth wiring region is provided with N second ground wires tilted in the second direction, wherein the N second power wires are disposed in parallel as being spaced apart; the N second ground wires are laid in parallel as being spaced apart; the N second power wires and the N second ground wires are one by one alternately disposed in parallel according to the first arrangement order; and the first direction is opposite to the second direction.

29. The head-mounted device according to claim 26, wherein each first power wire and one second power wire are disposed crosswise in an X form; and each first ground wire and one second ground wire are disposed crosswise in an X form.

30. The head-mounted device according to any one of claims 26 to 30, wherein the wiring structure further comprises a first protective layer, a second protective layer, and a first insulating layer;
a first adhesive layer is disposed between a first surface of the first wiring sublayer and the first protective layer such that the first surface of the first wiring sublayer is bonded to the first protective layer;
a second adhesive layer is disposed on a second surface of the first wiring sublayer and one side of the first insulating layer such that the second surface of the first wiring sublayer is bonded to the side of the first insulating layer;
a third adhesive layer is disposed on a third surface of the second wiring sublayer and the other side of the first insulating layer such that the third surface of the second wiring sublayer is bonded to the other side of the first insulating layer; and
a fourth adhesive layer is disposed between a fourth surface of the second wiring sublayer and the second protective layer such that the fourth surface of the second wiring sublayer is bonded to the second protective layer.

31. The head-mounted device according to any one of claims 1 to 30, wherein an elastic material is filled between the wearing apparatus and the wire harness.

32. The head-mounted device according to any one of claims 1 to 31, wherein the wearing apparatus comprises a mounting housing and a band; the band is connected with the mounting housing; and the acoustical device is disposed within the mounting housing.

33. The head-mounted device according to any one of claims 1 to 32, wherein the wearing apparatus further comprises a battery part which is disposed opposite to the host; the wearing apparatus is connected with the battery part; and the wire harness is connected between the battery part and the host for power supply and communication.
